# EUROPEAN PATENT APPLICATION

(11) **EP 4 775 977 A1**
(43) Date of publication of application: **15.07.2026**
(21) Application number: 26151086.1
(22) Date of filing: 09.01.2026
(51) Int. Cl.: G01N 29/04, G01N 29/06, G01N 29/22, G01N 29/24, G01N 29/26, G01N 29/265

(54) **MULTIPLE MODALITY IMAGING DEVICE WITH COINCIDENT MAPPING FOR NON-DESTRUCTIVE TESTING**

(30) Priority: 09.01.2025 GB 202500275
(71) Applicant: Darkvision Technologies Inc., North Vancouver, BC V7M 3G3 (CA)
(72) Inventor: HALPENNY-MASON, Mike, North Vancouver, V7M 3G3 (CA); MANDERS, Graham, North Vancouver, V7M 3G3 (CA); PERROT, Vincent, North Vancouver, V7M 3G3 (CA)
(74) Representative: Ter Meer Steinmeister & Partner

(57) **Abstract**

Devices and methods are described for non-destructive testing of materials and components using multiple imaging modalities, such as ultrasound and optical imaging, to generate three-dimensional data volumes that can identify flaws, such as cracks. The devices comprise an imaging tool with an ultrasound array and an optical system, which are coupled to a first and a second block regions, respectively. The block may be separated by an interface layer that is sonically transparent and optically reflective. The methods involve emitting and receiving ultrasound signals from the ultrasound array, receiving optical signals from the optical system, determining a pose for the imaging tool, and assembling the ultrasound and optical images to create a multimodal image volume assembly. The devices and methods can be used for imaging pipelines and manufactured parts, such as airplane wings, to provide accurate and intuitive information about the structural integrity and environmental impact of the tubulars.

## Description

### FIELD

The current disclosure relates generally to non-destructive evaluation of materials and components using multiple coincident imaging modalities, and in particular to generating three-dimensional data volumes and identifying flaws.

### BACKGROUND

Nondestructive testing is a way to inspect and evaluate materials, components or assemblies without causing damage. Nondestructive testing may be used to find defects in manufactured parts such as tubulars, pipelines, casings, gears, wind turbines, airplane wings, wheels, and more. Cracks are a type of defect that are of particular interest as they are a major cause of failure in manufactured parts. Cracks are often present in welds and seams. Further, manufactured parts may span hundreds to thousands of meters or may be continuously produced, and it is generally necessary to inspect these manufactured parts throughout their entire length, thereby generating extended datasets. Accurate and efficient detection of structural defects is essential for the safe and reliable operation of these structures.

Ultrasonic testing is a favored form of nondestructive testing where ultrasonic waves pass into a material that is being tested and reflect off defects to return to the transducer where they are detected. However, while ultrasonic testing may provide critical information about the internal structure of a target, ultrasound images may not be the most intuitive modality for users to understand. Optical images or photographs are intuitive for users to identify features on a manufactured part because they provide a realistic and detailed visual representation of the surface of a target that closely resembles what users would see in the real world, enabling quick and accurate recognition of specific surface details and characteristics.

The inventors have appreciated a need for an imaging system that provides an intuitive representation of extended and multimodal datasets of the imaged target.

### SUMMARY

A system of one or more computers can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions. One general aspect of the multimodal imaging system includes an acoustically and optically transparent imaging block, may include at least a first surface, a second surface, and a target contact surface; a phased array ultrasonic transducer coupled to the first surface, for emitting ultrasound waves through the imaging block to an ultrasonic field of view on the target contact surface, and for receiving reflected ultrasound waves to generate received ultrasound signals; an optical system coupled to the second surface, for detecting optical signals through the imaging block from an optical field of view on the target contact surface, the optical field of view substantially overlapping with the ultrasonic field of view, and generating received optical signals; a tracking system for determining a magnitude and a direction of movement (i.e. movement vector), based on comparing a first received optical signal and a second received optical signal; and a stitching system for generating an image assembly based on one or more of the received ultrasound signals and the received optical signals using the determined magnitude and direction of movement. Other embodiments of this aspect include corresponding computer systems, apparatus, and computer programs recorded on one or more computer storage devices, each configured to perform the actions of the methods.

Implementations may include one or more of the following features. The multimodal imaging system where the imaging block further may include: a first region that is acoustically transparent may include said first surface; and a second region that is acoustically and optically transparent may include said second surface and said target contact surface, and acoustically coupled to the first region to form an interface therebetween; and where the interface is configured to reflect the optical signals such that the optical field of view substantially overlaps with the ultrasonic field of view. The first region and the second region are made of different materials. The imaging block further may include an optically reflective interface layer to reflect the optical signals such that the optical field of view substantially overlaps with the ultrasonic field of view. The optically reflective interface layer is a metal selected from one or more of aluminum, silver, gold, copper, platinum, chromium, nickel, titanium and alloys thereof. A central optical axis within the optical field of view of the optical system and a central axis within the ultrasonic field of view of the phased array ultrasonic transducer are aligned within at least a portion of the imaging block. The first surface and the second surface are the same, and where the ultrasound waves are steered such that the optical field of view substantially overlaps with the ultrasonic field of view. The first surface and the second surface are the same, and where the optical imaging system further may include an optical lens such that the optical field of view substantially overlaps with the ultrasonic field of view. The acoustically and optically transparent imaging block may include a material selected from one or more of polymethyl methacrylate (PMMA), polycarbonate (PC), polystyrene (PS), polyethylene (PE), high-density polyethylene (HDPE), polyvinyl chloride (PVC), polyurethane (PU), polysulfone (PSU), borosilicate glass, fused silica (quartz), and aluminosilicate glass. The optical system may include one or more of an imaging sensor, a camera, and a laser. The multimodal imaging system may include an optical lens coupled between and to each of the optical system and the second surface. The light source may include one or more of a visible light source, an infrared light source, an ultraviolet light source, and a coherent light source. The tracking system further determines a tool pose, based on the magnitude and direction of movement. The tracking system further may include one or more of a gyroscope, an accelerometer and a high-frequency ultrasound system for generating sensor signals, and determining the magnitude and direction of movement is further based on the sensor signals. A method of controlling a robotic system for imaging a manufactured part, the robotic system including a multimodal imaging system, the method may include: generating a scanning trajectory; deploying the multimodal imaging system based on the generated scanning trajectory, for acquiring imaging data for generating a three-dimensional image assembly; generating a tool pose of the multimodal imaging system using the tracking system; and updating the deployment of the multimodal imaging system over the scanning trajectory based on the generated tool pose. Generating a tool pose is further based on the detected one or more markers. Updating the deployment of the multimodal imaging system over the scanning trajectory is further based on the encoded information. The encoded information includes a definition of a region of interest, and updating the deployment of the multimodal imaging system over the scanning trajectory further may include updating the scanning trajectory to include the region of interest within the scanning trajectory. The encoded information includes a definition of an exclusion region, and updating the deployment of the multimodal imaging system over the scanning trajectory further may include updating the scanning trajectory to exclude the exclusion region from the scanning trajectory. Generating the scanning trajectory further may include associating imaging parameters for the multimodal imaging system with the scanning trajectory, where deploying the multimodal imaging system further may include updating imaging parameters for the multimodal imaging system based on the associated imaging parameters, where the encoded information includes updated imaging parameters and a definition of a region of interest, and where updating the deployment of the multimodal imaging system over the scanning trajectory further may include updating the scanning trajectory to include the region of interest within the scanning trajectory and associating the updated imaging parameters with the scanning trajectory over said region of interest. Updating the deployment of the multimodal imaging system over the scanning trajectory further may include updating the scanning trajectory to re-acquire imaging data for the identified assembly regions. Updating the deployment of the multimodal imaging system over the scanning trajectory further may include updating the scanning trajectory to re-acquire imaging data of the flaw with updated imaging parameters. Updating the deployment of the multimodal imaging system over the scanning trajectory further may include updating the scanning trajectory based on the user input. Implementations of the described techniques may include hardware, a method or process, or computer software on a computer-accessible medium.

One general aspect includes a method of generating a three-dimensional volume assembly of a target using a multimodal imaging system including an acoustically and optically transparent imaging block. The method also includes emitting ultrasound signals from the phased array ultrasonic transducer through the imaging block to an ultrasonic field of view on the target contact surface; receiving reflected ultrasound signals at the phased array ultrasonic transducer through the imaging block from the ultrasonic field of view, to generate received ultrasound signals; receiving optical signals at the optical system through the imaging block from an optical field of view on the target contact surface, the optical field of view substantially overlapping with the ultrasonic field of view, to generate received optical signals; determining a magnitude and a direction of movement based on comparing a first received optical signal and a second received optical signal; generating a tool pose based on the magnitude and the direction of movement; generating ultrasound imaging frames using the received ultrasound signals; generating transformed imaging data using the tool pose and one or more of the ultrasound imaging frames and the received optical signals; and combining a plurality of transformed imaging data to generate the three-dimensional volume assembly. Other embodiments of this aspect include corresponding computer systems, apparatus, and computer programs recorded on one or more computer storage devices, each configured to perform the actions of the methods.

Implementations may include one or more of the following features. The method may include: processing the three-dimensional volume assembly to identify a flaw in the target. The received optical signals are used to generate a first optical imaging frame and a second optical imaging frame, and where determining the magnitude and the direction of movement is based on comparing the first optical imaging frame and second optical imaging frame. Determining the magnitude and the direction of movement is based on determining a correlation between the first optical imaging frame and second optical imaging frame. Determining the magnitude and the direction of movement is an iterative optimization method based on a similarity measure between the first optical imaging frame and second optical imaging frame. The method may include the step of illuminating the target. The method may include: deploying one or more visual markers, detecting and identifying the one or more visual markers in the received optical signals, and generating one or more responses based on the detected and identified one or more visual markers. Generating the one or more responses further may include providing one or more of an auditory feedback, a visual feedback and a tactile feedback to a user. Generating the one or more responses further may include updating one or more system parameters. Detecting and identifying the one or more visual markers further includes extracting encoded information from the one or more visual markers and providing the extracted encoded information with the one or more responses. The encoded information includes one or more of a reference coordinate location, a reference frame location and orientation, a reference axis direction, a part type, a material type, a job number, a part number, a client name, a target scanning region identifier, a potential flaw region identifier, an imaging system configuration, a segmentation pattern, and a calibration pattern. The one or more markers include one or more of a QR code and a singular repeated pattern. The method may include displaying the three-dimensional volume assembly to a user using one or more of virtual reality or augmented reality. The method may include: generating a three-dimensional model of the target, based on the three-dimensional volume assembly; determining a surface location of the target using the three-dimensional model; updating one or more imaging parameters for generating ultrasound imaging frames, using the surface location of the target; generating updated ultrasound imaging frames using the received ultrasound signals and the updated one or more imaging parameters; generating updated transformed imaging data using the tool pose and one or more of the updated ultrasound imaging frames and the received optical signals; and combining one or more of a plurality of transformed imaging data and a plurality of updated transformed imaging data to generate the three-dimensional volume assembly. Determining a magnitude and a direction of movement is based on comparing a first received optical signal including at least a portion of the optically detectable pattern and a second received optical signal including at least a portion of the optically detectable pattern. Determining a magnitude and a direction of movement is further based on comparing the first ultrasound imaging frame and the second ultrasound imaging frame. Implementations of the described techniques may include hardware, a method or process, or computer software on a computer-accessible medium.

One general aspect includes a method of calibrating a multimodal imaging system for imaging a target. The method also includes deploying one or more calibration markers, the calibration markers including an optically detectable pattern and an acoustically detectable pattern that is co-located with the optically detectable pattern; emitting ultrasound signals from the phased array ultrasonic transducer through the acoustically and optically transparent imaging block to an ultrasonic field of view on the target contact surface; receiving reflected ultrasound signals at the phased array ultrasonic transducer through the acoustically and optically transparent imaging block from the ultrasonic field of view, to generate received ultrasound signals; receiving optical signals at the optical system through the acoustically and optically transparent imaging block from an optical field of view on the target contact surface, the optical field of view substantially overlapping with the ultrasonic field of view, to generate received optical signals; generating optical imaging frames including the optically detectable patterns using the received optical signals, and identifying said optically detectable patterns in the generated optical imaging frames; generating ultrasound imaging frames including the acoustically detectable patterns using the received ultrasound signals, and identifying said acoustically detectable patterns in the ultrasound imaging frames; generating an imaging transformation between the optical imaging frames and the ultrasound imaging frames, based on matching the optically detectable patterns in the imaging frames with the acoustically detectable patterns in the ultrasound imaging frames; and storing the imaging transformation. Other embodiments of this aspect include corresponding computer systems, apparatus, and computer programs recorded on one or more computer storage devices, each configured to perform the actions of the methods.

Further aspects of the methods and systems as described herein are set out below and in the appended claims.

### BRIEF DESCRIPTION OF THE DRAWINGS

Various objects, features and advantages will be apparent from the following description of embodiments of the methods, systems and devices as described herein, as illustrated in the accompanying drawings. The drawings are not necessarily to scale, emphasis instead being placed upon illustrating the principles of various embodiments of the methods, systems and devices as described herein.
**FIG. 1** is a schematic representation of an imaging tool deployed on a target manufactured part as a non-destructive inspection tool in accordance with one embodiment as described herein.
**FIG. 2** is a perspective view of an imaging system in accordance with one embodiment as described herein, including a reference frame.
**FIG. 3A** to **3E** are cross-sectional views of imaging systems in accordance with embodiments as described herein.
**FIG. 4** is a block diagram of an imaging system in accordance with one embodiment as described herein.
**FIG. 5** is a schematic perspective view of an imaging tool in accordance with one embodiment as described herein.
**FIG. 6** is a flow diagram for carrying out a method for pose estimation and tracking in accordance with one embodiment as described herein.
**FIG. 7** is an example of optical image data acquired by an imaging tool in accordance with one embodiment as described herein.
**FIG. 8A** and **8B** are different views of exemplary multimodal data volumes acquired by an imaging tool in accordance with one embodiment as described herein.
**FIG. 9** is a schematic representation of an imaging tool deployed on a target manufactured part with a visual marker deployed thereon in accordance with one embodiment as described herein.
**FIG. 10** is a flow diagram for carrying out a registration calibration method in accordance with one embodiment as described herein.
**FIG. 11** is a flow diagram for carrying out a method for calibrating an imaging system for internal reflections in accordance with one embodiment as described herein.
**FIG. 12** is a flow diagram for carrying out a method in accordance with one embodiment as described herein.
**FIG. 13** is an illustration of an application for the device inspecting an airplane wing over a curvilinear path.

### DETAILED DESCRIPTION

With reference to the accompanying figures, various aspects of the methods, systems and devices as described herein will now be described. Several possible alternative features are introduced throughout this description and described accordingly. It is to be understood that, according to the knowledge and judgment of persons skilled in the art, such alternative features may be substituted in various combinations to arrive at different embodiments as described herein. For the sake of simplicity and clarity, the same reference numbers have been used in different figures to show similar or corresponding elements throughout the figures and description.

Non-destructive testing (NDT) methods are widely applicable across various manufactured parts to ensure their integrity and functionality. Examples include aerospace components such as turbine blades and aircraft fuselage panels, which are inspected for cracks, inclusions, voids, porosity, and material inconsistencies resulting in varying acoustic properties using ultrasonic testing (UT). Pipeline segments and pressure vessels in the oil and gas sector undergo rigorous NDT methods, including UT, to detect weld flaws, corrosion, and cracks. Additionally, composite materials used in wind turbine blades and sporting equipment are inspected for delamination and voids using advanced ultrasonic techniques. NDT also detects welding defects (e.g., incomplete fusion and slag inclusions), heat treatment errors (e.g., hardness variations and residual stresses) or the like resulting in variations in material properties, and fatigue damage including microcracks and delamination. Additionally, NDT can verify dimensional variations and misalignments. These examples underscore the versatility and necessity of NDT in maintaining the safety and reliability of a wide array of manufactured parts across different industries. The quantification of flaws and damage in a target, including the accurate quantification of cracks, is crucial to ensure the integrity, safety, and reliability of components, to help prevent potential failures, reduces downtime, and ensures compliance with industry standards, ultimately enhancing product quality and performance.

Interpreting data from ultrasonic testing may not be as intuitive for a user as interpreting natural or photographic images. Displaying an optical image of a target in combination with ultrasound data can provide a more intuitive and familiar perspective to a wide variety of users, especially those with less familiarity with ultrasound. For such a display to be effective, images from the different modalities must be accurately registered.

Registering images obtained from different imaging modalities presents a complex array of challenges due to variations in scale, perspective, resolution, and the nature of the captured features. Each imaging modality produces images based on different physical principles, leading to distinct contrasts and artifacts that can complicate alignment. Differences in scale and perspective result in discrepancies where features may appear differently sized or oriented, necessitating advanced transformations for proper alignment. Variations in resolution can cause high-resolution images to reveal fine details absent in lower-resolution images, further complicating the registration process. Overcoming these challenges typically requires sophisticated algorithms capable of handling multidimensional data, robust feature extraction, and precise transformation techniques to achieve accurate and meaningful image registration. Systems, devices and methods are disclosed for generating three-dimensional ultrasound data of a target or manufactured part with registered optical data or images of a surface of the target by a multimodal imaging system **10** to scan manufactured parts and detect flaws. In embodiments, the imaging system includes an imaging tool or device that is deployed over a target surface, for example as a hand-held tool or a tool on a mechanical device, such as an end effector on a robotic manipulator. As used herein, imaging tool and imaging system are used interchangeably. The imaging system **10** includes an ultrasound array **12** and an optical system **108,** including but not limited to one or more of an optical imaging sensor, a camera and a laser. The ultrasound array **12** is configured for obtaining volumetric imaging data of the manufactured part, while the optical system is configured to capture data from the surface of the manufactured part for generating positional and displacement data for the deployable tool component, and for generating multimodal datasets for use in rendering. The system aims to provide a comprehensive solution for surface mapping, image registration and determining tool displacement relative to the part. This integration allows for solving tool displacement to generate a tool pose and subsequently for correcting beamforming and generating aggregate image volumes from multiple acquisitions of registered multimodal image data, thereby improving the overall accuracy of the generated volumetric data.

The imaging system **10** comprises an acoustically and optically transparent imaging block **100.** The ultrasound array **12** is coupled to the imaging block **100** and sends and receives ultrasound signals (pulses) through the imaging block and through a bottom surface **114** of the imaging block **100,** to and from the target **2,** defining an ultrasonic field of view (FoV) on the bottom surface **114** for the transducer array **12.** While the field of view of a phased ultrasound transducer array is typically defined by the width or aperture of the array and the penetration depth, as used herein the ultrasonic field of view refers to an area of the bottom surface 114 of imaging block 100, through which a target or region is insonated. The optical system **108** is coupled to the imaging block **100** and receives optical signals from the target **2** through the bottom surface **114** and the imaging block **100,** defining an optical FoV on the bottom surface **114** for the optical system **108.** A substantial portion of the optical FoV on the bottom surface **114** overlaps with a substantial portion of the ultrasonic FoV on the bottom surface **114.** In embodiments, bottom surface **114** of imaging block **100** is in contact with a surface of the manufactured part. In embodiments, there is a standoff distance between bottom surface **114** of imaging block **100** and a surface of the manufactured part. In embodiments, optical system **108** is coupled to the imaging block **100** through an optical lens **112.** Without loss of generality, a transformation between the FoV of the transducer array **12** and the FoV of the optical system **108** is known based on the configuration of these components.

In embodiments, the imaging block **100** comprises first sonically transparent block region **102** and second sonically and optically transparent block region **106** bonded together at substantially sonically transparent interface layer **104.** The interface layer **104** helps to achieve accurate registration and segmentation by reflecting optical signals from the same Field of View (FoV) on the part's surface as the insonified Field of View, without interfering with ultrasound waves **20.** The ultrasound array **12** is coupled to the first block region **102** and sends and receives ultrasound signals (pulses) through the first and second block regions **102, 106** and interface layer **104** therebetween, to and from the target **2,** through bottom surface **114.** The optical system **108** is coupled to the second block region **106** and receives optical signals along optical paths **110** from the target **2** through bottom surface **114** and the second block region **106,** the optical signals internally reflected off the interface layer **104,** defining a field of view for the optical system **108.**

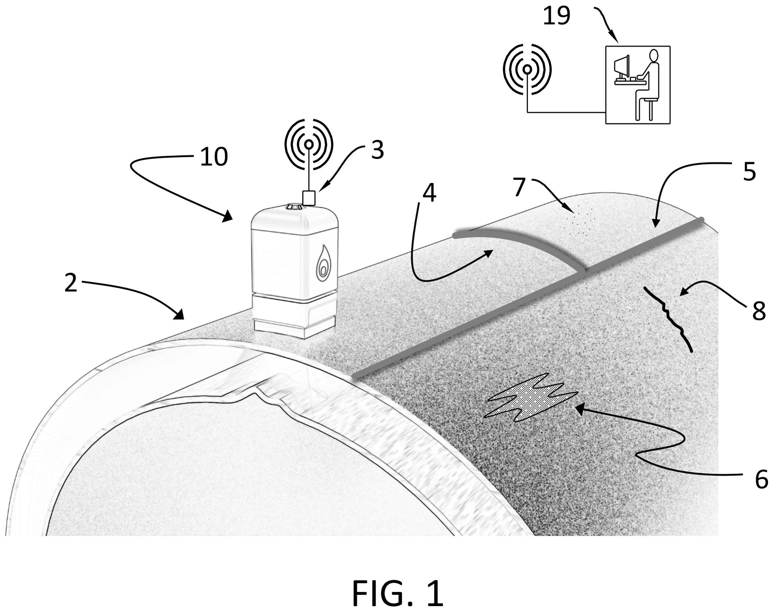

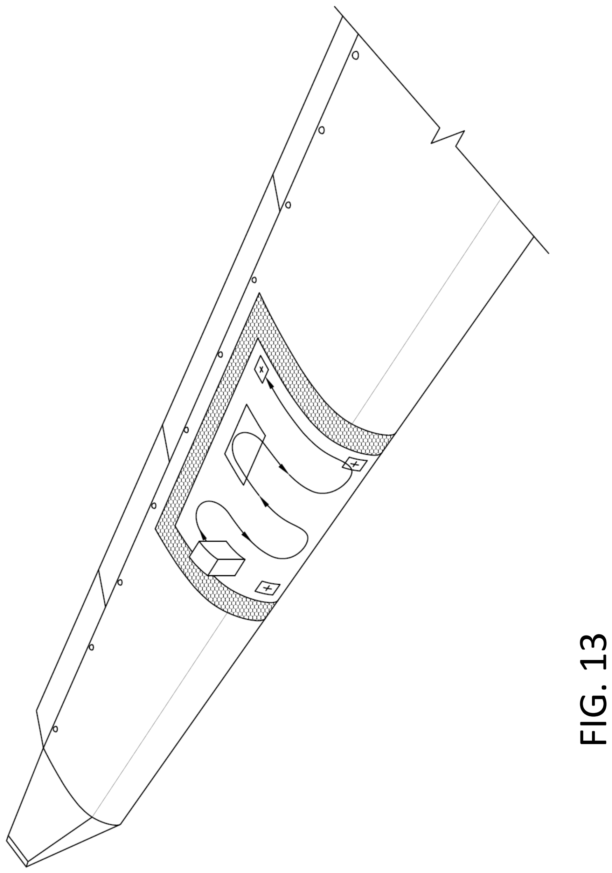

In embodiments, a user at an operations site deploys an imaging tool **10.** **FIG. 1** illustrates an exemplary NDT imaging tool **10,** imaging a manufactured part or target **2.** In embodiments, the imaging tool **10** may include a wireless transmitter **3,** enabling wireless transmission to a computing device. In **FIG. 1** the target **2** is illustrated as tubular but may include a wide variety of manufactured parts. The target **2** may include various features, such as transverse welds **4,** longitudinal welds **5,** corrosion **6,** pitting **7,** cracks **8,** voids, delamination, and differences in material properties. During its lifetime, the structural integrity of a target or manufactured part can become compromised, which can lead to failures. In embodiments, the data acquired by the imaging tool **10** may be processed and visualized at the imaging tool having a processor and display or at a computing system **19,** normally remote from the operations site. Fig. 13 illustrates the case where the target **2** is an airplane wing (or portion thereof) and the imaging tool **10** inspects the curved surface along path **150.**

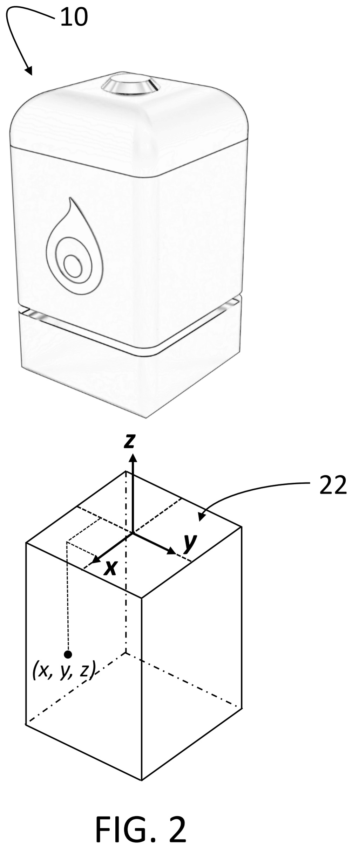

For clarity in explaining the present method and system, and with reference to **FIG. 2****,** it is assumed that 3D volumes of ultrasound data of the target are acquired using a two-dimensional ultrasound array **12.** It will nonetheless be apparent to those skilled in the art, that the disclosed imaging tool can also obtain 2D slices of ultrasound data from a one-dimensional linear array, and the creation of 2D slices and 3D volumes will be treated interchangeably. The native units for target 3D volume may be Cartesian **(*x, y, z*)** as shown in **FIG. 2****.** In some applications, such as inspecting tubulars, the native units may be cylindrical **(r, z, Θ**). Ultrasound reflections are sampled to capture both positive and negative pressures. The signals are post-processed to extract the absolute signal energy, for example by downmixing the ultrasound signals by the carrier frequency. A single frame comprises a plurality of scanlines **50** by a plurality of samples along each scanline, where the brightness of each pixel represents the reflected energy at that time and scanline. The raw data may be stored in memory or demodulated (e.g. through down-mixing) and then computing the envelope to store intensity values in memory. The imaging tool also captures an optical image of a surface **22** of the target **2** being inspected, as schematically illustrated in **FIG. 2****.** In embodiments, this optical image is mapped as a texture to an extracted or detected surface from a captured ultrasound data volume.

In operation, a typical data flow includes acquiring ultrasound volumes of the target and optical images of the target surface for each volume. Tool displacement and pose is determined in real-time or near real-time based on the acquired optical data, and volume data is transformed to a reference coordinate frame based on the determined tool displacement and pose, generating a blended extended data volume assembly. This Cartesian data is stored into memory as X, Y, Z pixels (aka voxels), as described in further detail below. During subsequent visualization, the stored data volume assembly can be visualized and rendered as an intuitive display. In embodiments, a three-dimensional model of the target is generated from the transformed and stored data volume. A GPU operates on Cartesian voxels and models to create visualization appropriate for a 2D monitor used by operators. The scan conversion from acquired ultrasound images to displayed images can be pre-computed for efficient viewing. The optical images and three-dimensional models can be displayed to the user, such as by mapping the optical image as surface texture or by modifying a parameter, such as color, of a point cloud of the captured volume data based on the optical image data.

### Imaging Block

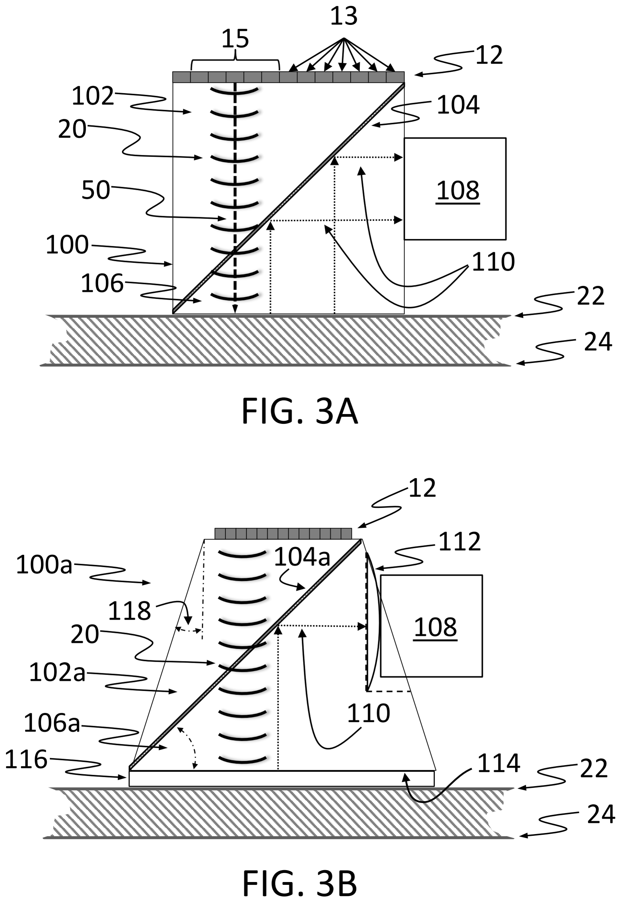

Various embodiments of the imaging system and tool are illustrated in **FIG. 3A to FIG. 3E****.** With respect to **FIG. 3A****,** a cross-sectional view of an embodiment of the imaging tool **10** is illustrated. The imaging tool **10** includes an ultrasound array **12** comprising a plurality of ultrasound elements **13,** as described in detail below. In an embodiment, the ultrasound array is a linear phased array ultrasonic transducer. In another embodiment, the ultrasound array is a two-dimensional phased array ultrasonic transducer. The elements **13** of the ultrasound array **12** are excited to generate an ultrasound wave **20,** that travels along scanlines **50,** through the imaging block **100** and towards the target **2.** In embodiments, ultrasound waves **20** travel through a first block region **102,** through an interface layer **104,** and through a second block region **106,** towards a proximal surface **22** of the target **2.** A portion of the ultrasound wave continues towards a distal surface **24** of the target **2.** In some embodiments, there may be an additional standoff distance between a bottom surface **114** of the second block region **106** and the surface **22** of the target 2. The transmitted waves **20** may have a plane or curved wavefront, the former having a flat front and the latter having a front that is substantially curved or arc-shaped. Curved / arc-shaped waves can be seen as the polar coordinate equivalent of planar waves. The transmitted waves **20** may be focused, as described in detail, below. In embodiments, the transmitted waves **20** may have a complex or irregular wavefront, for example, generally corresponding to an irregular curved surface of the target being inspected. In embodiments, multiple transmitted waves **20** may be transmitted, where a first transmitted wave comprises a flat wavefront, and one or more subsequently transmitted waves comprise a curved or complex wavefront. While single transmitted waves **20** are illustrated within the imaging system **10** in **FIG. 3A to FIG. 3E****,** multiple waves may be transmitted concurrently or independently.

Imaging system **10** includes an imaging block **100** made from an acoustically and optically transparent material, having multiple surfaces that define a shape of the imaging block **100.** In embodiments, one or more of the surfaces of imaging block **100** are flat. In embodiments, one or more of the surfaces of imaging block **100** are curved. An ultrasonic transducer array **12** is operatively coupled to a first surface of the imaging block **100.** An optical system 108 is operatively coupled to a second surface of the imaging block **100.** In embodiments, the first surface and the second surface are different surfaces of the imaging block **100.** In embodiments, the first surface and the second surface are the same surface of the imaging block **100.** The imaging block **100** further comprises a target contact surface, through which a target is imaged using multiple imaging modalities. A substantially overlapping ultrasonic field of view and optical field of view are defined on the target contact surface.

In embodiments, the imaging block **100** comprises a first block region **102** made from a sonically or acoustically transparent material. In an embodiment, the first block region **102** includes a top surface or face, a bottom surface or face which is non-parallel to the top surface, and a plurality of side walls or faces generally perpendicular to the top surface. In an embodiment, all surfaces of the first block region **102** are planar surfaces or faces. In an embodiment, the plane defined by the bottom surface forms a 45-degree angle with the plane defined by the top surface. In an embodiment, the first block region **102** forms a triangular prism, where two sidewalls are right triangles and correspond to the bases of the triangular prism.

In embodiments, the imaging block **100** further comprises a second block region **106** coupled to the bottom surface or face of the first block region **102.** The second block region **106** is made from a sonically and optically transparent material. In an embodiment, the first and second block regions **102, 106** are made from the same material. The second block region **106** includes a bottom surface or face, a top surface or face which is non-parallel to the bottom surface, and a plurality of side walls or faces generally perpendicular to the bottom surface. In an embodiment, all surfaces of the second block region **106** are planar surfaces or faces. In an embodiment, the plane defined by the top surface of the second block region **106** forms a 45-degree angle with the plane define by the bottom surface of the second block region **106.** In an embodiment, the second block region **106** forms a triangular prism, where two sidewalls are right triangles and correspond to the bases of the triangular prism. Without loss of generality, the bottom surface of the first block region **102** and the top surface of the second block region **106** are coupled and conform to each other.

Materials that exhibit low acoustic loss to ultrasound and good mechanical properties, such as density, mechanical strength and thermal stability, allow them to efficiently transmit ultrasonic energy with minimal attenuation. Materials that are highly transparent at wavelengths corresponding to the visible spectrum, infrared and ultraviolet light, which have a suitable refractive index, and good mechanical properties, such as mechanical strength, flexibility, and thermal stability, allow them to efficiently transmit light with minimal attenuation. The first block region **102** and second block region **106** are made from materials that are well-suited for transmitting both ultrasound and optical signals. Preferably, the first block region **102** and second block region **106** are made from materials that are acoustically well-matched to one or both of the target **2** and the ultrasound array **12.** In an embodiment, the first and second block regions **102, 106** are made from plastic materials, including but not limited to, polymethyl methacrylate (PMMA), polycarbonate (PC), polystyrene (PS), polyethylene (PE), high-density polyethylene (HDPE), polyvinyl chloride (PVC), polyurethane (PU), and polysulfone (PSU). In an embodiment, the first and second block regions **102, 106** are made of glass, including but not limited to, borosilicate glass, fused silica (quartz), and aluminosilicate glass.

In embodiments, the imaging block **100** further comprises an interface layer **104** between the bottom surface of the first block region **102** and to the top surface of the second block region **106.** The interface layer **104** is an optically reflective region such that light travelling from bottom surface **114** along optical paths **110** within the second block region **106,** and that intersect the top surface of said second block region **106,** are internally reflected into the same second block region **106.** The optical paths **110** that are projected from bottom surface **114** and arrive at optical system **108** define an optical field of view. The thickness of the interface layer **104** is sufficiently thin resulting in a negligible acoustic interface, and therefore does not result in significant attenuation of an ultrasound wave traversing between the imaging block **100** or first and second block regions **102, 106** at operational frequencies (generally in the range of 200 kHz to 30 MHz). In an embodiment, the interface layer **104** is well matched to the first block region **102** and the second block region **106,** providing a smooth transition therebetween to facilitate the transmission of acoustic energy between the first and second block regions, thereby maximizing transmission efficiency.

In an embodiment, the interface layer **104** is a metal layer formed by vapor deposition on the bottom surface of the first block region **102.** In embodiments, the interface layer **104** is a metal layer formed by vapor deposition on the top surface of the second block region **106.** As is well known in the art, vapor deposition of metal on a crystal substrate involves heating the metal to its vaporization point in a vacuum chamber, allowing the metal atoms to condense uniformly on the crystal surface, thereby forming a thin, optically reflective layer with controlled thickness and high adhesion properties. This process enables the creation of precise and durable metallized coatings, with a thickness typically ranging from a few nanometers to several micrometers, depending on the duration of deposition and the specific process parameters. The thickness directly influences the reflectivity and optical properties of the surface. For an internal optically reflective surface, a thickness of approximately 100 nanometers to 1 micrometer is often targeted to achieve optimal reflective qualities without significant absorption. The thickness of the layer is also chosen so that ultrasound signals are allowed to pass through them without significant attenuation, which will be dependent on the metal type. In embodiments, the thickness of interface layer **104** is less than one-quarter of the wavelength of the ultrasound signals within the first and second block regions. For example, in embodiments, the thickness of interface layer **104** is less than 50 µm. In other words, the properties of the interface layer **104** are such that it is optically reflective and acoustically transparent. In embodiments, the interface layer **104** is formed using other methods known in the art for depositing a thin, uniform metal layer on a substrate, including but not limited to electroplating, chemical vapor deposition, electroless plating, spray coating and spin coating. The selection of alternative methods depends on various factors, including the materials of the first and second block regions **102, 106** and of the interface layer **104.**

The optical reflectance of the deposited layer is dependent on the type of metal used and the deposition quality. Metals like aluminum and silver can achieve high optical reflectivity, often exceeding 90% in the visible spectrum when properly deposited. In embodiments, appropriate metal or combination of materials are selected for optically reflective surfaces that are tailored to specific wavelengths ranging from infrared, through the visible spectrum, to ultraviolet light. The interface layer **104** is made from metals including, but not limited to, aluminum, silver, gold, copper, platinum, chromium, nickel, titanium, and alloys thereof. In a preferred embodiment, the interface layer **104** is made from aluminum.

The first block region **102** is coupled to the second block region **106,** with the interface layer **104** therebetween, by a suitable bonding material between said block regions. The thickness of the bonding material must have a negligible impact on the acoustic and optical properties of the imaging block. Preferably, the bond is formed by a homogeneous material, without contaminants or features that alter the acoustical impedance of the imaging block, such as dust, dirt, or gas bubbles, among others. Similarly, the bonding material is chosen so that optical properties of the interface layer **104,** such as the optical reflectivity, are not significantly affected. The bonding material is also chosen to withstand high pressures, high temperatures, and high mechanical stresses, typical of the expected application environment, such as for example, down-hole wellbore examination, pipeline inspection, or underwater or maritime inspection. In embodiments, the bonding material is an epoxy resin. In some embodiments, the dimension of the imaging block between the transducer array and a bottom surface **114** of the imaging block is between 10 and 50 mm. In embodiments, the distance between the transducer array **12** and the bottom surface **114,** for example, a height of the imaging block, is between 20 and 25 mm.

One purpose of the imaging block **100** is to enhance the efficiency of acoustic energy transmission between the transducer and a target surface being imaged, without significant deviations or deformations of the emitted and reflected ultrasound signals. This is achieved by minimizing the mismatches in acoustical properties between the piezoelectric elements **13** of the transducer array **12** and the target **2** being inspected, including any mismatches between the piezoelectric elements **13** of the ultrasound array **12** and the first block region **102,** between the first block region **102** and the interface layer **104,** between the interface layer **104** and the second block region **106,** and between the second block region **106** and the target **2,** including any bonding materials therebetween. Mismatches of acoustic properties can lead to significant reflections of the ultrasound waves at the interfaces between the materials, reducing the amount of acoustic energy that penetrates the target and thereby diminishing the quality of the received signal. The acoustic properties of the block regions and interface layers are selected to have values that transition between the transducer elements and a target to provide a smooth transition for acoustic energy, thereby maximizing transmission efficiency and improving the resolution and sensitivity of the ultrasonic inspection.

In embodiments, the imaging system **10** comprises a matching layer between the ultrasound transducer **12** and the imaging block **100,** such as first block region **102.** Matching layers for ultrasound transducers, as are well known in the art, are thin layers of material placed between the transducer elements **13** and the target to be imaged, designed to optimize the transmission of acoustic energy by minimizing any impedance mismatch. These layers enhance the efficiency of ultrasound wave propagation, improving image quality and resolution. In embodiments, the imaging system **10** includes a matching layer to minimize the acoustical impedance mismatch between the transducer elements **13** and the imaging block **100.** The matching layer material is selected based on the material of the imaging block components and the material of the transducer elements, while also taking into consideration the target material.

### Frustum-shaped Imaging Block

With respect to **FIG. 3B****,** in an embodiment imaging block **100a** is illustrated as having a square frustum shape. The imaging block **100a** comprises first block region **102a,** interface layer **104a** and second block region **106a.**

The first block region **102a** includes a top surface, a bottom surface non-parallel to the top surface, and a plurality of side walls forming an angle **118** with respect to a perpendicular direction to the top surface. In an embodiment, the plane of the bottom surface forms a 45-degree angle with the plane of the top surface.

The second block region **106a** includes a bottom surface, a top surface non-parallel to the bottom surface, and a plurality of side walls forming an angle **118** with respect to a perpendicular direction to the bottom surface. In an embodiment, the plane of the top surface forms a 45-degree angle with the plane of the bottom surface.

The first block region **102a** is coupled to the second block region **106a** with an interface layer **104a** therebetween. The first block region **102a** is coupled to the second block region **106a** by a bonding material, as described above. Without loss of generality, the bottom surface of the first block region **102a** and the top surface of the second block region **106a** conform to each other.

An optical system **108,** as described in further detail below, is coupled to a sidewall of the second block region **106a.** In embodiments, said sidewall further comprises an inclusion for coupling the optical system **108** to the second block region **106a,** as illustrated in **FIG. 3B****.** The surface of the inclusion on which the optical system is coupled to is configured such that a central optical axis of the optical system **108** is aligned with a central axis of the transducer array **12.** In other words, said surface of the inclusion is configured such that optical paths **110** arrive at the optical system **108** with minimal optical distortion and aberrations, and the optical field of view of the optical system **108** generally corresponds to the field of view of the ultrasound transducer **12.** In embodiments, a substantial portion of the optical field of view overlaps with a substantial portion of the ultrasonic field of view. In an alternative embodiment, the sidewall on which the optical system is coupled to further comprises a protrusion for coupling the optical system **108.** Similarly to the inclusion described above, the surface on which the optical system **108** is coupled is configured such that a central optical axis of the optical system **108** is aligned with a central axis of the transducer array **12,** and the corresponding optical and ultrasound fields of view substantially overlap. The protrusion is made from a material with the same physical properties of the second block region **106a.** In embodiments, the protrusion is integrally formed with the second block region **106a.** In embodiments, the protrusion is coupled to the second block region **106a** in an optically transparent manner.

In an embodiment, an ultrasonic or acoustic lens **116,** described in more detail, below, is coupled to the bottom surface **114** of the second block region **106a.** In an embodiment, an optical lens **112,** described in more detail, below, is coupled to a sidewall of the second block region **106a.** In embodiments, the optical lens **112** is further configured to correct optical distortions, aberrations and misalignments of the coupled optical system **108.**

An ultrasound transducer array **12** is coupled to the top surface of the first block region **102a.** In an embodiment, the footprint of the ultrasound array **12** is smaller than the top surface of the first block region. Acoustic reflections off the sidewalls of imaging block **100a** are reduced because of the angled sidewalls due to the square frustum shaped, which results in less internal interference for the ultrasound signal to and from the target. The angle **118** of the sidewalls is selected in the range of 15 to 45 degrees, and is selected based on various factors including but not limited to the speed of sound of the imaging block material, the ultrasound frequency, the shapes of the emitted ultrasound wavefronts, the target material, and the overall dimensions of the imaging block, including the distance to a surface of the target. In an embodiment, the angle **118** of the sidewalls is 30 degrees.

### Polyhedral Imaging Block

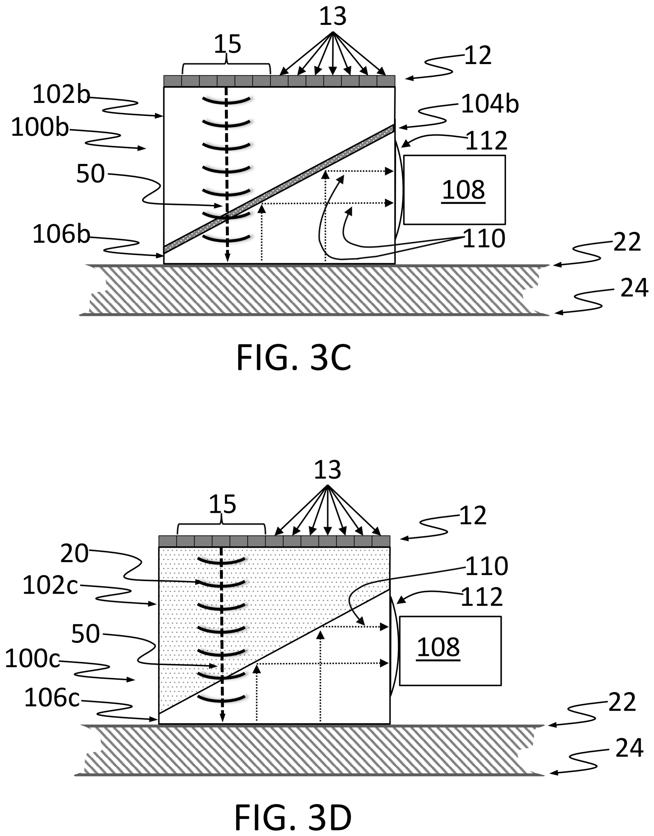

With respect to **FIG. 3C** and **FIG. 3D****,** embodiments of imaging blocks **100b** and **100c** are illustrated as having a six-sided polyhedral shape. The imaging block **100b** comprises first block region **102b,** interface layer **104b** and second block region **106b.** The imaging block **100c** comprises first block region **102c** and second block region **106c.**

In embodiments, the first block region **102b, 102c** includes a top surface, four side walls generally perpendicular to the top surface, and a bottom surface non-parallel to the top surface. The bottom surface is generally perpendicular to two opposing side walls, forms an acute internal angle with a third side wall, and forms an obtuse internal angle with a fourth side wall. In an embodiment, the plane of the bottom surface forms a 45-degree angle with the plane of the top surface.

In embodiments, the second block region **106b, 106c** includes a bottom surface, four side walls generally perpendicular to the bottom surface, and a top surface non-parallel to the bottom surface. The top surface is generally perpendicular to two opposing side walls, forms an acute internal angle with a third side wall, and forms an obtuse internal angle with a fourth side wall. In an embodiment, the plane of the top surface forms a 45-degree angle with the plane of the bottom surface of the second block region **106b, 106c.**

With respect to **FIG. 3C****,** the first block region **102b** is coupled to the second block region **106b** with an interface layer **104b** therebetween. The first block region **102b** is coupled to the second block region **106b** by a bonding material, as described above. In an embodiment, the top surface of the first block region **102b** and the bottom surface of the second block region **106b** are parallel to each other, and the bottom surface of the first block region **102b** and the top surface of the second block region **106b** conform to each other.

With respect to **FIG. 3D****,** in an alternative embodiment, the first block region **102c** is coupled by a bonding material to the second block region **106c,** without an interface layer therebetween. The bottom surface of the first block region **102c** and the top surface of the second block region **106c** conform to each other. As will be apparent to those of skill in the art, material properties, such as the refractive index, for each of the first block region **102c** and the second block region **106c,** and the angle of boundary between the first block region **102c** and the second block region **106c** can be selected such that light arriving at the boundary from the bottom surface of the second block region **106c** will be internally reflected, without the need for an interface layer. The optical FoV substantially overlaps with the acoustical FoV.

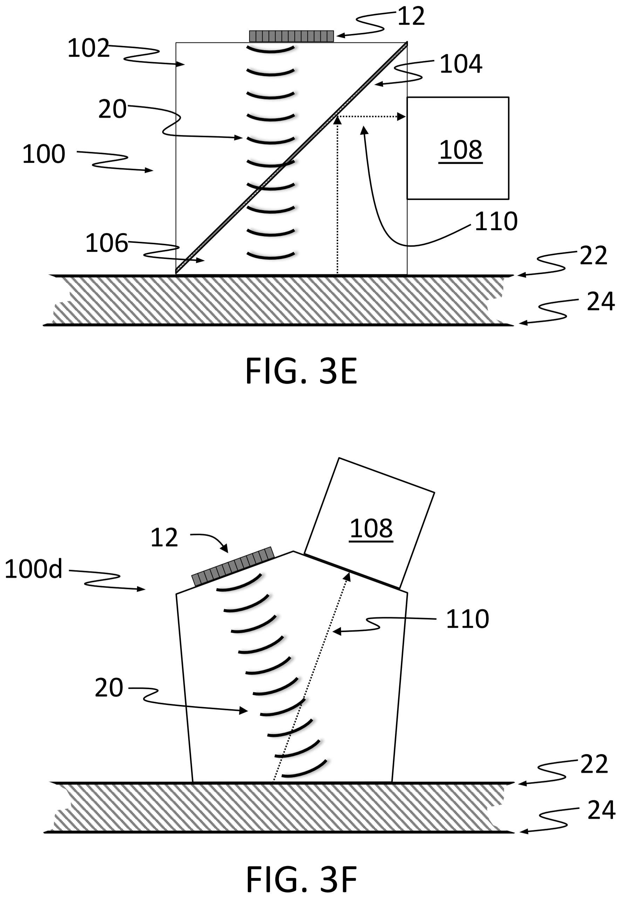

With respect to **FIG. 3F****,** imaging block **100d** is illustrated as having a five-sided cross-sectional shape. A transducer array **12** and optical system **108** are located on adjacent sides of a single imaging block **100d.** Optical paths **110** propagating from a target contact surface and arriving at the optical system **108** define an optical field of view. Ultrasound waves **20** are emitted from array **12** and arrive at the same target contact surface, to insonate a target and defining an ultrasonic field of view, with reflected waves being received at array **12.** A substantial portion of the optical field of view overlaps with a substantial portion of the ultrasonic field of view.

In embodiments, an ultrasonic or acoustic lens (not shown in **FIG. 3F****),** described in more detail below, is coupled to a bottom surface **114** of imaging block **100d.** In embodiments, an optical lens (not shown in **FIG. 3F****),** described in more detail below, is coupled to and between imaging block **100d** and optical system **108,** and is configured to correct optical distortions, aberrations and misalignments of optical system **108.**

### Reflection-attenuating Sidewalls

In an embodiment, one or more external surfaces of the imaging block **100, 100a, 100b, 100c, 100d** may include a plurality of features, such as for example, but not limited to, facets, chamfers, surface features and surface texture, to reduce or eliminate internal reflections of acoustic waves within the imaging block that arrive at said one or more external surfaces . In an embodiment, the maximum dimensions of the facets or features are a fraction of the wavelength of the ultrasound waves **20.** In further embodiments, the maximum dimensions of the facets or features are no greater than about one quarter of the wavelength of the ultrasound waves **20.**

In a further embodiment, an acoustically attenuating material may be provided on portions or the totality of one or more external surfaces of the imaging block **100, 100a, 100b, 100c, 100d.** The acoustically attenuating material may be acoustically matched to the material of the imaging block **100, 100a, 100b, 100c, 100d,** or to the components of the imaging block, including first block region **102, 102a, 102b, 102c** and/or the second block region **106, 106a, 106b, 106c,** such that acoustic waves travelling across said external surfaces into the acoustically attenuating material do not encounter an acoustically reflective boundary. As a result, the acoustic waves are not reflected at boundaries defined by said external surfaces and acoustic waves that enter the acoustically attenuating material are attenuated within said material. In some embodiments, acoustically attenuating materials include silicone rubber, polyurethane, epoxy resins, filled silicones, polymer composites, polymer composites including carbon or glass beads, and porous ceramics.

### Ultrasound Transducer

With reference to **FIG. 3A to FIG. 3E****,** the imaging system **10** comprises one or more transducer arrays **12.** In an embodiment, the imaging system **10** contacts the target object, such as manufactured part, and the tool is deployed and moved around to inspect different areas for defects. In an embodiment, there is a standoff distance between the imaging tool **10** and the target object, as the imaging tool is moved around to inspect different areas for defects. In further embodiments, a couplant is provided between the imaging block **100** and target **2.** The couplant must provide both adequate optical and acoustic properties, namely both optical and acoustic transparency, as well as minimizing the acoustic mismatch between the imaging block and the target. For example, a couplant that is acoustically transparent but optically opaque is not adequate for use with the imaging tool as described.

In an embodiment, transducer elements **13** are arranged as one or more evenly spaced one-dimensional transducer arrays **12.** The one or more linear arrays insonify a cross section of the target **2,** generating transmitted or emitted waves **20.** As the imaging tool **10** moves over the target **2,** the one or more linear transducer arrays **12** capture frames of these cross sections, preferably on the order of millimeters, defining an ultrasonic field of view for the transducer array. The reflections of these acoustic waves from the target features are converted to digital signals, often called raw radiofrequency (RF) data. In embodiments, the data is separated and stored as in-phase (I) and quadrature (Q) components, referred to as I/Q data, which represents the amplitude and phase information of the data signal as separate components.

In another embodiment, transducer elements **13** are arranged as evenly spaced two-dimensional phased transducer array, such as that described in PCT patent application no. PCT/IB2024/050652. In embodiments, each element in the two-dimensional transducer array comprises a transducer electrode connected through a signal redistribution layer (SRL) to driving circuits for controlling the operation of the 2D transducer array. As the imaging tool is moved over the target, the transducer continually captures volumes of the target over the ultrasonic field of view of the transducer array. Thousands of these volumes are combined to create a 3D visualization of the target. In an embodiment, the imaging tool is moved by a user, and the slower nature of such an inspection also means that the object can be redundantly scanned, using potentially even fewer receive channels, and then reassembled for imaging. Additionally, there may be several steering angles used, as described in further detail below. The set of images from plural steering angles, plural receive frames may then be compounded to create a high-resolution 3D image of the target.

In embodiments, the transducer array **12** may span the entire dimension of the top surface of the imaging block **100,** as illustrated in **FIG. 3A****,** **FIG. 3C** and **FIG. 3D****.** In embodiments, the transducer array **12** may span less than the entire dimension of the top surface of the imaging block **100,** as illustrated in **FIG. 3B** by imaging block **100a.** In embodiments, the transducer array **12** may span less than about a quarter of the top surface of the imaging block **100,** as illustrated in **FIG. 3E****.** Advantages to the transducer array **12** spanning less than the top surface of the imaging block **100** include reduced ultrasound reflections from the sidewalls of the imaging block.

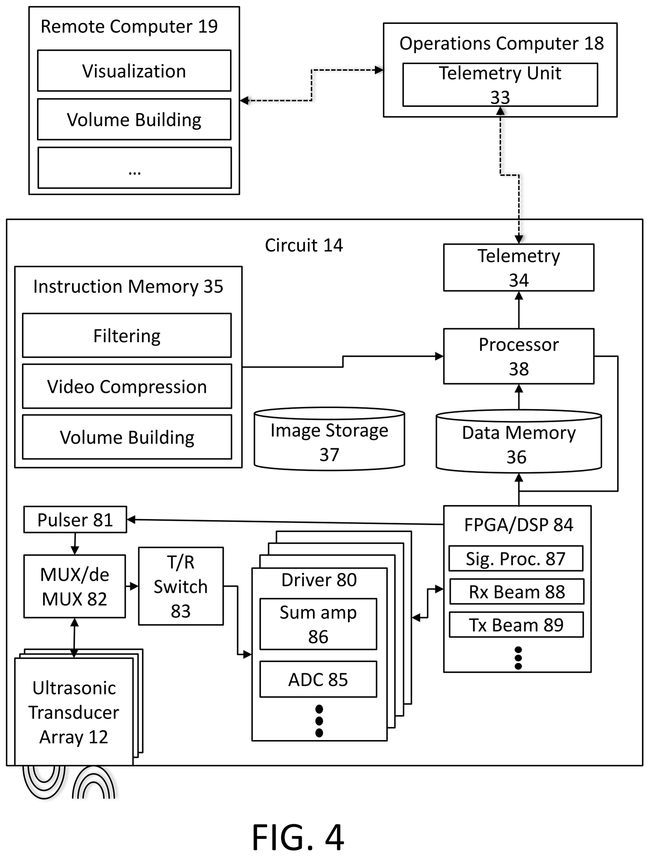

Each transducer array **12** comprises a plurality of acoustic transducer elements **13,** preferably operating in the ultrasound band. The frequency of the ultrasound waves generated by the transducer(s) is generally in the range of 200 kHz to 30 MHz, and may be dependent upon several factors, including the fluid types and velocities in a well or pipe and the speed at which the imaging device is moving. The use of a relatively large number of elements generates a fine resolution image of the object. In most uses, the wave frequency is 1 to 10 MHz, which provides reflection from micron features. The transducers may be piezoelectric, such as the ceramic material, PZT (lead zirconate titanate). Such transducers and their operation are well known and commonly available. Circuits **14** to drive and capture these arrays are also commonly available, as illustrated in **FIG. 4****.**

The number of individual elements in the transducer array affects the azimuthal resolution of the generated images. Typically, the number of transducer elements is a multiple of 2, and each transducer array is made up of 32 to 2048 elements and preferably 128 to 1024 elements. The logging speed and frame rate determines the resolution perpendicular to the azimuthal direction. An acoustic wave created by one or more of these elements, such that energy is generally focused along a line to form a what is called a scanline **50.** For a linear array, the scanlines are then assembled by the processor to form one frame that approximates one slice of the imaged location, and these slices are assembled into a 3D volume in a process called slice stacking. For a 2D array, scanlines are assembled by the processor to form a 3D volume.

An acoustic transducer element **13** can both transmit and receive sound waves. The shape and size of an array, or limitations of the electronics may mean that each transmit and receive event takes place on less than the full physical array, *i.e.*, an aperture **15.** The aperture **15** is a set of neighboring transducer elements that individually contribute towards the constructive wavefront and increase its acoustic energy. In the non-limiting example of a one-dimensional or linear array, the number N of scanlines **50** that make up a full frame may be the same as the number of elements M in the array, but they are not necessarily the same. For example, a 256-element array may operate with a 64-element transmit aperture that slides from one side to the other, capturing many smaller scanlines than if the whole array were pulsed and received at once. The elements in the aperture are selected from the whole array by multiplexors (MUX/deMUX). Normally these are a symmetrical set of elements opposite the part spot to be sonified, *i.e.* the spot and aperture center have the same azimuthal angle θ. Multiple transducer elements **13,** per aperture **15,** operate in a phase delayed mode to generate a scanline. There may be as many scanlines **50** as elements by changing the aperture by a single element for each scanline. The apparent origin of the wave can be synthesized within the device, referred to as a transmission point, by the set of transducers, or the aperture **15.** In the non-limiting examples illustrated in **FIG. 3A****,** **3C** and **FIG. 3D****,** scanline **50** appears to radiate (dashed line) from the center of the five transducer elements **13** in aperture **15.** In embodiments, a scanline **50** may be steered at an angle θ (not illustrated).

The timing of each scan comprises a transmission window Tx, receiving window Rx and dwell period therebetween. As used herein, a scanline **50** is the stream of data received during Rx and may be provided in physical coordinates using the speed of sound. During transmission, the transducers are excited with an electrical pulser, which pulse may be square, sinusoidal or other waveform. At the end of Tx there is a dwell period while the wave travels out to the target and back to the transducer element or aperture. The dwell period calculations must consider the dimensions and materials of first and second block regions **102, 106** that comprise an imaging block **100.** During the Rx window, the circuit 'listens' to reflections at the transducer element or aperture. There may be multiple reflections along paths of various lengths, so the Rx window is typically much wider than the Tx window. The reflections are received at the transducer elements **13.** The electrical signals of the reflections may be stored in raw form for later, offline beamforming and image reconstructions. Alternatively, the signals are beamformed in real time and the reconstructed image is stored on the imaging device. The accuracy of beamformed images is improved when accurate data regarding the distance of the target from the imaging surface on the imaging tool is available, such as when a model of the target surface is generated from acquired data.

In an embodiment, sparse transmit and sparse receive methods and techniques can be used, such as those described by PCT patent application no. PCT/IB2023/053173. For example, a 64x64 element array may transmit on all 4096 elements and receive on a smaller subset of only 64 total elements. This subset may be user-selectable or fixed for a given application. Similarly, the number of steering angles may be user-selectable or fixed for a given application. In use the tool may be quickly moved over the object where there are no features of interest at the basic receive pattern and steering angle, but then stopped or slowed down when features are detected. At that point the system begins to fill in the compounded image with additional angles and receive patterns until the user moves on or a signal-to-noise threshold is reached.

In ultrasound arrays, multiple discreet omnidirectional pulses are emitted from the plural transducer elements **13,** which waves interfere constructively and destructively to produce a wavefront moving in the direction of the scanline. As known in the art, altering the timing of the pulse at each transducer element, can steer and focus the wavefront. In steering, the combined wavefront appears to move away in a direction that is not orthogonal from the transducer face, but still in the plane of a two-dimensional array. In focusing, the waves all converge at a chosen distance from the elements **13.** The location of the convergence is the focal point and the area insonified defines the resolution of the system. The transmitted wave may or may not be focused at a point on the surface or target to be imaged. The geometry of first and second block regions **102, 106** can be considered so that the wave is focused outside of the first and second blocks. US Patent No. 5,640,371 provides a method and apparatus for acoustic imaging using beam focusing, beam steering and amplitude shading to increase image resolution and overcome side lobe effects, which may be used in pipelines.

The transmitted wavefront may be described as 'coherent,' 'weakly focused,' 'defocused,' 'unfocused,' 'plane wave', 'spherical', 'spiral', 'divergent,' or 'non-convergent' in as much as the transmitted waves may have some theoretical focal point within or behind the transducer. The transmitted waves may be a plane or curved wavefront, the former having a flat front and the latter having a front that is substantially curved or arc-shaped. Curved / arc-shaped waves can be seen as the polar coordinate equivalent of planar waves. These shapes are created by phase delays of the pulses emitted by each transducer element. Notably, these fronts do not converge or focus on the surface of the target. Preferably, a wavefront hits surface of a target at the same angle of incidence relative to the normal of the surface of the target or tubular along the whole area of sonification. The angle of incidence is what defines the overall steering angles for a transmit. This transmit may be computed by ray tracing, knowing the array position relative to the target, target geometry, speed of sound of fluid, and array geometry.

Receive beamforming is understood by persons skilled in the art of ultrasound. In broad terms, the processor uses plural phases delays, pre-stored in a memory (e.g. look-up-table, or LUT) that convolve / shift the signals based on different focal depths. These signals are combined to reconstruct the final image, whereby weakly focused reflections get diluted and strongly focused reflections are reinforced. As an example, "Delay and Sum" beamforming technique can be used for this purpose.

In conventional imaging with one-dimensional arrays, images are formed by beamforming one line at a time. This will drastically reduce the acquisition rate. To speed up the beamforming, the same channel data can be used with slightly different delays in order to generate multiple lines, which in preferred embodiments can be extended to generate an entire image slice around a target tubular from a single transmit event. This is done by running parallel beamforming on all the scanlines at the same time. This is computationally intensive but allows for much faster image reconstruction.

In embodiments, adaptive beamforming is performed based on one or more detected and tracked surfaces or features of a target. Beamforming algorithms use representations of a target geometry to calculate directions of propagation and reflection of acoustic signals, and beamforming parameters are adapted based on updated representations of target geometry. In a non-limiting example, the location and orientation of a target surface is detected in 3-D volumetric ultrasound data, and the position and orientation of the tool **10** is determined, as described in detail below.

After areas of the target are captured from plural angles and then receive beamformed to create plural reconstructed images, the step of compounding can be used to combine each of these reconstructed images to create a compounded image using summation of data in the overlapping zone. The summation can be coherent (using RF or I/Q data) or envelope data (B-mode). The receive beamforming reconstruction will depend on the transmit delays and geometry of the transducer array. The individual angled images are shifted accordingly to a common reference frame, and corresponding pixels in each image are summed to create pixels of the compounded image. The compounded image removes noises that are not coherent in the individual images, reinforces reflectors seen in plural angles, and smooths over glints present in only one of the images.

In embodiments, the bottom surface **114** of the second block region **106** of the imaging device **10** is aligned to be parallel with an imaged surface **22** of a target, i.e. a line or plane of the transducer array of the imaging tool **10** is generally aligned to be parallel to a plane defined by the imaged surface **22** of the target. Therefore, scanlines radiate perpendicularly out from transducer elements **13,** arrive focused and perpendicular to the target surface, and reflect back to transducer elements **13.** The times of flight (ToF) for every transmission to the target are substantially the same, with small variations due to surface imperfections. In an embodiment, the receiving window Rx may be tightly framed around a first proximal surface and a second distal surface of the target, i.e. the time for recording reflections is timed to start just before the inner specular reflections and stop just after the outer specular reflections of the emitted ultrasound pulses. In other embodiments, the receiving window Rx may be extended to capture signals corresponding to additional reflected and resonant signals from other known features of the target. Differences in the speed of sound in the imaging block and in the target are considered when calculating Tx and Rx windows.

### Ultrasonic Lenses

The imaging system **10** may further comprise an acoustic lens **116** covering an outer or bottom surface **114** of the second block region **106,** as schematically illustrated in **FIG. 3B****.** The acoustic lens may be convex or concave, or may be a concave or convex logarithmic lens having an extended focal zone. The skilled person will appreciate that focusing also depends on the relative speed of sound from the lens material to an optional couplant used to provide an interface with the target.

In an embodiment, a convex lens is used. The convex lens is made of a material having an acoustic velocity less than the acoustic velocity of a couplant between the imaging device **10** and the target **2.** The acoustic velocity of a couplant varies depending on the specific formulation of the couplant, where water- and gel-based couplants have an acoustic velocity of approximately 1480 m/s, glycerin-based couplants have an acoustic velocity of approximately 1900 m/s, and silicone-based couplants have an acoustic velocity of approximately 950 to 1050 m/s. A suitable lens material having a lower acoustic velocity is room temperature vulcanization (RTV) silicone, which has an acoustic velocity of approximately 900 to 1050 m/s.

In another embodiment, a concave lens is used. The material of the concave lens preferably has an acoustic impedance close to a couplant used to acoustically couple the lens to the target, and has a higher acoustic velocity than the couplant. Suitable materials include hard plastics such as polymethylpentene (PMP) (e.g. TPXTM), polystyrene (PS), and poly(methyl methacrylate) (PMMA).

In a further embodiment, a logarithmic lens is used. The logarithmic lens is shaped to create an extended focal zone that can produce sharp images at a range of distances, i.e. images having a high depth of field. Having an extended focal zone is advantageous because a range of depths from inside a target to a surface opposite a surface being imaged and everything in between can be imaged with the same tool. The logarithmic lens can be concave or convex. A concave logarithmic lens would be made of a material having a higher velocity than a coupling medium used to acoustically couple the lens to the target, such as polymethylpentene (PMP) (e.g. TPXTM), polystyrene (PS) or poly(methyl methacrylate) (PMMA). A convex logarithmic lens would be made of a material having a lower velocity than a couplant used to acoustically couple the lens to the target, such as RTV silicone.

### Optical system

The imaging system **10** further includes an optical system **108** coupled to a surface of the imaging block **100.** In embodiments, the optical system **108** is coupled to a surface of second block region **106.** In an embodiment, the optical system **108** includes at least one camera. In an embodiment, the optical system **108** includes a laser. In an embodiment, the optical system **108** includes a structured lighting system. In an embodiment, the optical system **108** includes a stereoscopic imaging system.

The optical system **108** is optically coupled to an external surface of the imaging block **100** and is adapted to form a plurality of optical images of the target surface within a defined optical field of view. Light from the target surface field of view travels along a plurality of optical paths **110** and may arrive directly at the optical system **108** or may be reflected off an interface layer **104.** The light detected by the optical system **108** is used to generate image data. In embodiments, the optical system **108** is optically coupled to the imaging block **100** at the second block region **106** and the plurality of optical paths **110** arrive at the optical system **108,** reflected from the interface layer **104** at the top surface of the second block region **106,** up from an optical field of view defined on the bottom surface **114** of the second block region **106,** and from a target **2** being imaged.

In an embodiment, the imaging system **10** includes a light source, to provide supplementary illumination to a target surface. In an embodiment, the light source is optically coupled to a sidewall of the second block region **106.** In an embodiment, the light source is optically coupled to the same sidewall of the second block region **106** as the optical system **108.** In embodiments, the light source is adapted to illuminate the target surface externally to the imaging block **100.** The light source is configured to illuminate a target surface **22** such that at least a portion of the light reflected off the target surface follows the plurality of optical paths **110** from the target surface **22,** through the second block region **106,** to the optical system **108.** In embodiments, the light source comprises one or more of a "white" light source, a "colored" or bandwidth limited light source, a visible light source, an infrared light source, an ultraviolet light source, and a coherent light source.

In an embodiment, the imaging block **100** includes an optical lens **112** between the optical system **108** and the second block region **106,** the optical lens **112** optically coupled to the optical system **108** and to the second block region **106.** The optical lens **112** may serve to focus, magnify, and/or correct light arriving by optical paths **110** to components of the optical system **108.** In an embodiment, a plurality of lenses is coupled to the imaging block **100,** and the optical system **108** includes one or more components, including but not limited to, one or more cameras and one or more light sources, including one or more lasers. Each of the one or more components is optically coupled to one or more of the plurality of lenses, to direct light between the target and each of the one or more components of the optical system **108,** in cooperation with the second block region **106** and the interface layer **104.**

As is known in the art, by leveraging the interaction of light of different wavelengths with materials, valuable information about the material's composition, structure and properties can be obtained. In an embodiment, the optical system **108** is further adapted to receive and detect wavelengths of light in the infrared, visible, and/or ultraviolet spectrum. In an embodiment, the optical system **108** includes an infrared spectroscopy system. In an embodiment, the optical system **108** includes an ultraviolet-visible spectroscopy system. In an embodiment, the optical system **108** includes a Raman spectroscopy system. In an embodiment, the optical system **108** includes a photoluminescence spectroscopy system. In an embodiment, the optical system **108** includes a hyperspectral imaging system.

In an embodiment, the optical system **108** includes an optical sensor, a light source, such as a laser, and timing electronics to determine the distance of a target surface from the imaging tool **10,** such as a standoff distance. In an embodiment, the standoff distance is determined as the distance from the surface of the target to the bottom surface **114** of the imaging block **100.** The accuracy of beamformed images is improved when accurate data regarding the distance of a target surface from the imaging surface on the imaging tool is available.

In an embodiment, the optical system **108** includes a structured lighting system. The structured lighting system includes a light source, such as a laser, one or more optical elements to create an illumination pattern, and one or more imaging sensors. The structured lighting system is adapted to enable the precise capture of three-dimensional spatial information to generate a three-dimensional reconstruction of the target's geometry and surface characteristics. In an embodiment, the light source and optical elements are not coupled to a sidewall of the imaging block **100,** and are adapted to illuminate the target surface externally to the imaging block **100.**

In an embodiment, the optical system **108** includes a stereoscopic imaging system. The stereoscopic imaging system includes two or more optical imaging sensors, such as cameras, with a known transformation therebetween. In an embodiment, the stereoscopic imaging system includes a lens for each of the optical imaging sensors. In an embodiment, the optical imaging sensors are coupled to the same sidewall of the imaging block **100,** and are adapted to receive light from the target along optical paths **110** to acquired images from two different angles. By leveraging the parallax effect created by the differing perspectives of each of the two or more optical imaging sensors, the stereoscopic imaging system determines the depth and spatial relationships of the imaged target surface, enabling the three-dimensional reconstruction of the target's geometry and surface characteristics.

In an embodiment, the optical system **108** performs a segmentation process on the optical image data, to generate one or more segmented regions of the target surface. In embodiments, the segmentation is performed by a processor on the imaging tool. In embodiments, the segmentation is performed by the imaging system **10** on a remote processor or computer. The imaging system then performs a mapping process, using a coordinate transformation calculated by the pose estimation and tracking system as described herein, which generates a coordinate mapping for the one or more segmented regions between optical image coordinates and acoustic or ultrasound image coordinates. The ultrasound data is then segmented based on the mapped one or more segmented regions. In an embodiment, the one or more segmented regions in optical image coordinates, which are two dimensional, are projected into one or more segmented volumes in ultrasound coordinates. In this manner, a feature that is readily visible in an optical image is used to segment ultrasound data, where said feature may not be readily identifiable.

In an embodiment, the interface or boundary layer between the first and second block regions **102, 106** is a curved surface. The shapes of both the bottom surface of the first block region **102** and the top surface of the second block region **106** conform to each other. In an embodiment, the direction of the plurality of optical paths **110** striking a curved interface or boundary layer are modified such that the resulting image data generated by the optical system **108** is magnified, focused, collimated, beam formed, or otherwise corrected, while maintaining a substantially overlapping optical field of view with the ultrasonic field of view. In an embodiment, the curved interface or boundary layer cooperates with an optical lens **112** between and coupled to the optical system **108** and second block region **106,** in order to generate corrected image data.

As will be apparent to those of skill in the art, the refractive index of each of the first block region **102** and the second block region **106,** and the angle of the bottom surface of the first block region **102** and top surface of the second block region **106** can be selected such that the plurality of optical paths **110** arriving at the optical system **108** from the bottom surface undergo total internal reflection, without the need for an interface layer. The differences in refractive indices at the boundary between the first and second block regions **102, 106,** and the resulting angles of incidence of the optical paths **110** arriving from the bottom surface of the second block region allow light arriving from the target to be reflected to the optical system **108.** In an embodiment, the direction of the ultrasound signals emitted by the transducer array **12** are adjusted such that they are steered towards the bottom surface of the second block region, while considering any differences in acoustic impedance between the first block region **102** and the second block region **106,** such that a substantial portion of the optical field of view overlaps with a substantial portion of the ultrasonic field of view.

In some embodiments, the imaging system **10** includes a laser light source for ultrasound wave generation within a target, the laser light source coupled to imaging block **100.** The laser light source directs a laser beam onto the target material's surface, for example, through imaging block **100** and bottom surface **114,** where rapid localized heating occurs due to the incident laser beam on the target, causing thermoelastic expansion that generates transient mechanical stresses that propagate as ultrasonic waves through the material. As the ultrasonic waves travel through the target, they interact with internal features including interfaces, defects, and inhomogeneities, causing reflections, scattering, and mode conversions, which encode spatial information about the internal structure of the target within the wavefield. In some embodiments, the laser light source includes a high-energy pulsed laser source. In some embodiments, the laser light source includes a high-energy modulated laser source. In some embodiments, the laser beam pulse duration, the laser beam energy, and the laser beam spot size is controlled to adjust the broadband frequency content of the generated ultrasonic waves. In some embodiments, the laser light source includes one or more of near-infrared lasers, ultraviolet lasers, and high spectrum lasers. The material for imaging block **100,** including first and second imaging blocks **102, 106,** is chosen such that the wavelength of the selected laser light source is not significantly absorbed.

The transducer array **12** is used to detect the generated ultrasonic waves and resulting reflections, which are used to generate imaging frames based on the encoded information of the internal structure of the target. Image reconstruction techniques, including but not limited to time-of-flight calculation, beamforming, synthetic aperture focusing and tomographic inversion are used to generate the imaging frames. In some embodiments, the laser excitation from the laser light source is raster scanned or sequentially pulsed at multiple locations of the target through the bottom surface **114** of imaging block **100.** In some embodiments, the laser excitation from the laser light source is directed using a predetermined pattern over the target. In some embodiments, the laser excitation from the laser light source is directed using a randomized pattern over the target. In some embodiments, the optical system is used to determine the locations of the laser beam on the target surface to further inform the image reconstruction techniques. In some embodiments, the laser excitation is directed to a region of interest of the target, defined within the bottom surface **114** of the imaging block **100.** The corresponding ultrasonic responses from the laser-generated ultrasonic waves are detected by the transducer array **12** and converted to received signals. The collected data signals are then combined to produce two-dimensional or three-dimensional imaging frames representing the internal structure of the target. In some embodiments, laser-generated ultrasonic waves are timed such that they arrive at different time windows than acoustic waves generated by the transducer array **12** and reflected from the target. In some embodiments, laser-generated ultrasonic waves are timed such that they arrive within the same time windows as for acoustic waves generated by transducer array **12** and reflected from the target.

### Circuits

The system comprises processing circuits for generating and receiving signals from the transducer elements **13.** The skilled person will appreciate that the circuits may implement logic in various combinations of software, firmware, and hardware that store instructions process data and carry out the instructions. Specialized ultrasound circuits exist to drive and receive arrays of ultrasound transducers, such as LM96511 from Texas Instruments. **FIG. 4** is a block diagram of components of the device's on-board circuits **14** and remote computing system **19,** including an onboard computer processor **38** (for display and post processing), FPGA block **84,** Summing Amps **86,** ADC **85,** MUX/DEMUX **82,** High Voltage T/R switch **83,** High Voltage Pulser **81,** and timing chips. The FPGA is an efficient chip for integrating many logical operations. The block may comprise Tx beamforming **89** and Rx beamforming **88,** DVGA control (Digitally controlled Variable Gain Amplifiers, not shown), as well as data processing operations **87,** such as B-mode (brightness mode) and Doppler processing. Although not shown, the circuits may additionally comprise motor drivers and memory chips. By way of example, the transmission step may include selecting the transducer elements **13** in the aperture **15,** calculating beamforming timings, loading the pulse timings from the FPGA **84,** activating the pulser **81** and MUXes **82** to pulse all elements. The dwell period may be set by the operator based on a nominal dimension of the target **2,** the nominal dimensions of the imaging block **100,** first and second block regions **102, 106,** the interface layer **104,** and speed of sound of a couplant. The Rx window may be set to capture reflected pulses based on the known, measured or nominal parameters of the target and of the surrounding physical environment. The raw image data is initially stored in memory **36.** This may be Terabytes of data. Instructions running on the remote processor include modules for digital receive beamforming, compound processing, wall thickness factor calculation and visualization. Intermediary images, such as a single beamformed image or the compounded image may be stored on the same or separate storage **37.** This shows a preferred division of resources for the system and methods as described herein. However, as computing resources improve, certain processes could be moved onto the handheld tool or device, such as beamforming and compounding. This could also be done during the downtime of the tool or device, when not actively imaging. In this manner, a recovered device is ready to upload fully compounded images to the remote computer for immediate visualization.

Without loss of generality, each of the circuit and electronic components described with reference to **FIG. 4** may comprise multiples of such chips, e.g. the memory may be multiple memory chips. For the sake of computing efficiency, several of the functions and operations described separately above may actually by combined and integrated within a chip. Conversely certain functions described above may be provided by multiple chips, operating in parallel. As a non-limiting example, the LM96511 chip operates eight transducers, so four LM96511 chips are used to operate an aperture of 32 transducers.

After the ultrasound data has been beamformed and compounded, it may be rendered for display by the system. A rendering engine may reside in software or on a GPU and has numerous standard rendering algorithms to output a visually pleasing 2D image, or a 2D projection of a 3D volume. The reflection signals may be displayed to a user in their raw signal form, whereby the 2D image is created from pixels separated by the signal's Time of Flight (ToF), and wherein pixel brightness is proportional to signal strength. Known rendering engines normally operate on pixels provided in Cartesian space, so a Cartesian voxel to display may be fetched from several coordinate voxels, LUT corrected, combined and then scan converted to Cartesian.

In addition to standard rendering options such as ray marching, texturing, and lighting, application-specific rendering may be applied to convey surface roughness, material reflectivity, attenuation, impedance and tubular defects. While some of these effects have no analogue in camera imaging, they highlight features detectable by ultrasound waves, especially those relevant to tubular structural integrity. For example, a small crack that is invisible to cameras may create a ringing ultrasound wave that can be displayed in a differentiating way on a monitor.

With further processing, a geometric model of the target may be created. Using various methods and techniques, such as edge detection and surface finding, the processor can create a mesh of the tubular for analysis. Such analysis may include measuring diameter, lengths, connections or identifying damage and flaws.

### Pose Estimation and Tracking

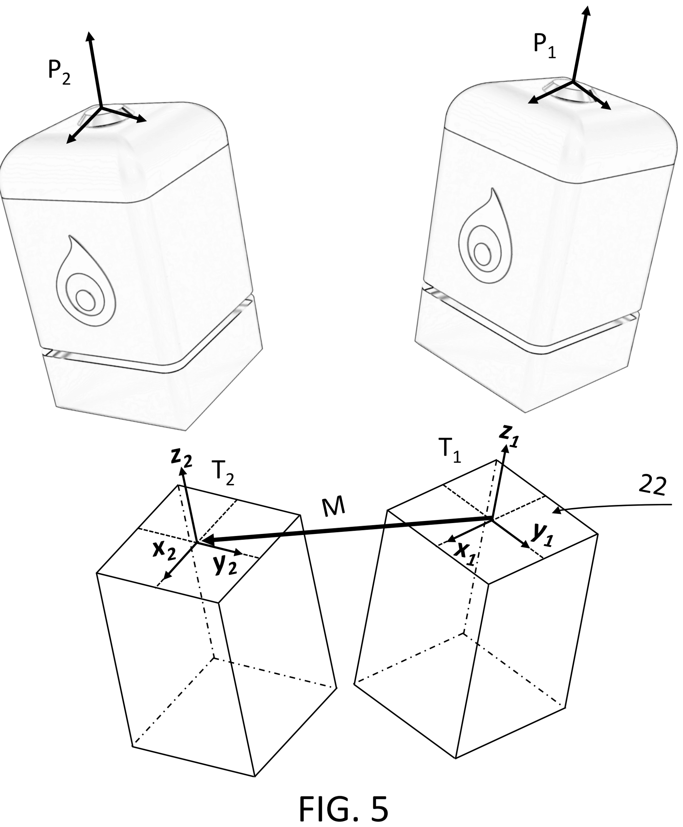

As illustrated in Fig. 1 and Fig.13, complex surface geometry of the target can make creating a digital twin difficult, unless the pose and location are known. Thus the imaging system **10** further comprises a pose estimation and tracking system **120,** to determine a position and orientation of the imaging tool, and therefore of the acquired image data, with respect to a three-dimensional reference frame, over time. In embodiments, the pose estimation and tracking system **120** employs one or more known tracking technologies and methods, including but not limited to dead-reckoning, optical tracking, laser tracking, tracking using High Frequency Ultrasound (HFUS), gyroscopic tracking, accelerometer-based tracking, beacon-based tracking and external tracking. As the imaging tool is moved over the surface **22** of a target **2,** the position and orientation generated by the pose estimation and tracking system **120** is used to locate the acquired ultrasound and optical data in a three-dimensional reference frame, and a three-dimensional volume assembly is constructed, as schematically illustrated in **FIG. 5****.** For example, in embodiments, ultrasound image volumes and surface images are stitched together using known methods to assemble a 3D volume of the scanned target.

In an embodiment, the optical system **108** includes the pose estimation and tracking system **120.** In a further embodiment, the pose estimation and tracking system **120** uses data from and cooperates with the optical system **108** to determine and track a pose of the imaging tool **10.** In yet a further embodiment, the pose estimation and tracking system **120** is separate from the optical system **108.** As schematically illustrated in **FIG. 5****,** an imaging tool has a first pose **P₁** at a first location, and the optical system **108** acquires imaging data having a relative reference frame **T₁** defined by **x₁**, **y₁**, **z₁**. The imaging tool is then moved to a second location, schematically illustrated by **M,** where the optical system **108** acquires imaging data having a relative reference frame **T₂** defined by **x₂**, **y₂**, **z₂**. Imaging data, such as an optical image frame, acquired at the first location is compared to imaging data acquired at the second location, and a transformation between **T₁** and **T₂** is determined, from which an updated tool pose **P₂** is determined, as described in more detail below. For purposes of illustration, the volumes of interest are not shown to overlap in **FIG. 5****,** however in practice there is substantial overlap of the regions of interest.

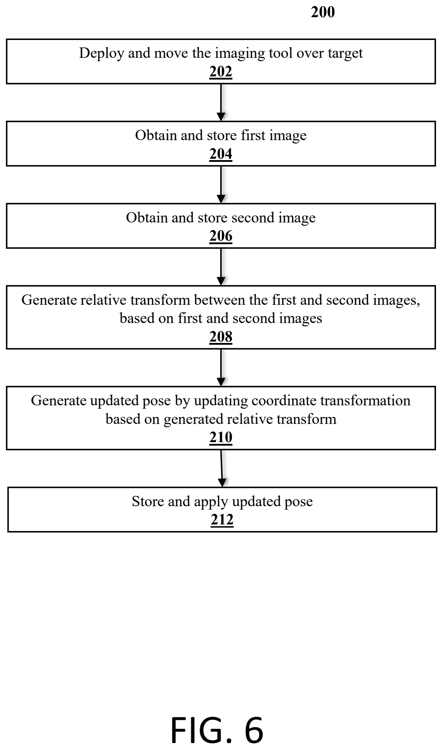

In an embodiment, the optical system **108** includes the pose estimation and tracking system **120.** An example imaging system **10** comprising an imaging tool **100** is used for pose estimation and tracking using process **200,** as illustrated in the flowchart of **FIG. 6****.** In some implementations, one or more process blocks of **FIG.** 6 may be performed by a device.

In operation, the imaging tool **10** is deployed on a target surface (block **202**). During a first time-step of process **200,** the optical system **108** obtains a first image of the target surface through the imaging block **100,** as described above, and stores a first image (block **204**). In embodiments, the first image is stored on one or more of a volatile memory and a non-volatile memory. In embodiments, the first image is stored on or more of the tool **10,** a remote computing system **19,** and a cloud storage system. A first pose of the imaging tool at the first time-step is known, for example, from a previously estimated pose, or set as a predetermined pose, for example, at the origin of a relative reference frame. During a second time step of process **200,** the optical system obtains a second image of the target surface and stores the second image (block **206**), similarly to the previous step. Next, the pose estimation and tracking system determines a relative transform between the first and second images (block **208**). A relative transform may describe a translation and/or a rotation, or an affine transformation. For example, in embodiments, a relative transform describes the direction and magnitude of the displacement of a moving imaging tool between a first time-step and a second time-step. In embodiments, the relative transform is determined by directly correlating the first and second images to extract displacement and rotation vectors. In embodiments, the relative transform is determined by an iterative optimization method using a similarity measure calculated between the first and second images. Non-limiting examples of iterative optimization methods include unconstrained optimization methods, such as gradient-based methods, and heuristic methods, such as genetic algorithms. In embodiments, measurements from additional sensors, such as gyroscopes, accelerometers and inertial measurement units, are also used to determine the relative transform. Thereafter, a second pose of the imaging tool **10** is determined by applying the relative transform between the first image and second image, to the known first pose (block **210**). Without loss of generality, when the pose of the imaging tool is known at a given time, both the pose of the optical image data and the pose of the ultrasound data acquired at that time is also known, as the coordinate transformation between each of a local reference frame of the imaging tool **10,** an optical image reference frame and an ultrasound image or volume reference frame are all known and assumed to be constant. Effects that arise from sources such as ultrasound steering, lensing effects, or differences due to speed of sound, among others, are considered during the beamforming process and integrated into the resulting pose of the beamformed ultrasound data. After the second pose has been determined, the second pose is stored and applied to the data (block **212**). Optionally, the pose of each data point or pixel of the optical second image data is generated and stored. Optionally, a timestamp is associated with the second pose. Optionally, the optical second image data is stored with the associated second pose. Optionally, the most recent ultrasound image frame or volume is stored with the associated second pose. Optionally, the pose of each data point or pixel from the most recent ultrasound image frame or volume is generated and stored. In an embodiment, the pose information is estimated from previous data points, for example by known interpolation methods, such as linear interpolation or bi-cubic interpolation. In an embodiment, pose information is estimated based on a dynamic model. The process is then repeated to estimate subsequent poses at subsequent time steps. For example, it will be apparent to those of skill in the art that data from the second time-step can be reutilized as data for the first time-step in subsequent iterations.

Although **FIG. 6** shows example blocks of process **200,** in some implementations, process **200** may include additional blocks, fewer blocks, different blocks, or differently arranged blocks than those depicted in **FIG. 6****.** Additionally, or alternatively, two or more of the blocks of process **200** may be performed in parallel.

In an embodiment, ultrasound data is acquired by the imaging system **10** at the same rate as optical image data is acquired. In an embodiment, common acquisition signal or trigger is used for both the optical data and the ultrasound data. In an embodiment, ultrasound data is acquired by the imaging system **10** at a faster rate than the optical image data. In embodiments, ultrasound data is acquired at a rate of between 10 and 10,000 frames per second, and optical image data is acquired at a rate between 30 to 100 frames per second (fps). As will be appreciated by those of skill in the art, a lower bound on the acquisition rate is in part determined by the expected deployment speed of the imaging tool, in order to maintain a desired spatial resolution.

As described above, the pose estimation and tracking system determines a similarity measure between the first image and the second image to estimate a relative transform between said first image and second image. A relative transform may include one or more of a translation, a rotation, and an affine transformation. A similarity measure quantifies the degree of resemblance between two images, providing a numerical value that reflects how alike or dissimilar the images are. In embodiments, the pose estimation and tracking system incrementally shifts the first and second images with respect to each other and calculates a similarity measure for each shift. For example, the second image may be incrementally translated and/or rotated with respect to the first image for plurality of translations and a plurality of rotations. The values for which a maximum similarity between the images is obtained correspond to the displacement in the optical image plane of the imaging tool **10.** For each pair of first and second images, the maximum shift is determined based on the speed with which the imaging tool **10** is moved, the acquisition or frame rate of the optical images, and the optical image resolution. In embodiments, the similarity measure is a pixel-based measure, such as the mean squared error of the pixel values, the mean absolute error of the image pixel values, or the peak signal-to-noise ratio. In embodiments, the similarity measure is a correlation-based measure, such as a linear correlation between pixel values of an image, or Pearson Correlation Coefficient, or the normalized cross-correlation of pixel values of an image. In further embodiments, the similarity measure is selected from a histogram-based measure, an information-theory measures, a feature-based measure, a transform-based measures, or a learning-based measures. In a preferred embodiment, the similarity measure is one or more of a correlation measure or a distance measure.

In a further embodiment, the pose estimation and tracking system determines a relative transform between a first ultrasound data frame and a second ultrasound data frame. An ultrasound data frame may comprise one-dimensional, two-dimensional, or three-dimensional data. In embodiments, the relative transform is determined by directly correlating the first and second ultrasound data frames to extract displacement and rotation vectors. In embodiments, the relative transform is determined by an iterative optimization method using a similarity measure calculated between the first and second ultrasound data frames. Non-limiting examples of iterative optimization methods include unconstrained optimization methods, such as gradient-based methods, and heuristic methods, such as genetic algorithms. In embodiments. the relative transform extracted from the optical system and the ultrasound data are combined to create a more accurate relative transform. In embodiments, measurements from additional sensors, such as gyroscopes and accelerometers, are also used to determine the relative transform. The calculated relative transform is used to calculate a pose of the imaging tool, as described above.

In an embodiment, the pose estimation and tracking system **120** further includes a high-frequency ultrasound (HFUS) tracking system for use in determining the position and orientation of the imaging tool **10.** In an embodiment, an HFUS system is coupled to and adapted to send and receive high frequency ultrasound signals through imaging block **100** to the target **2,** to track the position and orientation of the imaging tool **10.** In an embodiment, an HFUS tracking system is coupled to the first block region **102** and is adapted to send and receive high frequency ultrasound signals through the first block region **102,** through the interface layer **104,** and through the second block region **106,** to the target surface, to track the position and orientation of the imaging tool **10.** In an embodiment, the HFUS tracking system is adapted to send and receive high frequency ultrasound signals separate from the imaging block **100,** directly to and from the target. In an embodiment the HFUS tracking system is adapted to estimate a standoff distance between the imaging block **100** and the target surface.

In embodiments, the pose estimation and tracking system **120** includes one or more sensors for use in determining the relative transform and pose of tool **10,** such as gyroscopes, accelerometers, and other sensors. In an embodiment, the pose estimation and tracking system **120** includes one or more sensors and a plurality of signal beacons external to the imaging tool, which emit signals detectable by the one or more sensors, to determine the position and orientation of the imaging tool **10.** In an embodiment, the one or more sensors and plurality of signal beacons are acoustic. In an embodiment, the one or more sensors and plurality of beacons are optical. In an embodiment, the one or more sensors and plurality of beacons are electromagnetic. In operation, the pose estimation and tracking system **120** obtains signals from the one or more sensors, generated in response to signals emitted by the signal beacons. The sensor signals are used to triangulate the location and orientation of the imaging tool, based on known triangulation methods. In embodiments, pose estimation and tracking system **120** determines the location and orientation of an imaging tool based on known mapping techniques and methodologies, such as Simultaneous Location and Mapping (SLAM).

As the tool is deployed over the surface of a target, the pose of the imaging tool 10 determined by the pose estimation and tracking system is used to determine the pose of the acquired ultrasound data and optical data with respect to a three-dimensional reference frame, generating three-dimensional imaging data. The three-dimensional imaging data is used to generate an extended, blended data volume assembly which combines the acquired and transformed data. In embodiments, a blended data volume assembly includes one or more of the ultrasound data and optical data. In an embodiment, the three-dimensional imaging data is used to update a three-dimensional multimodal data structure. Without loss of generality, a three-dimensional multimodal data structure stores multiple data values at a three-dimensional location, such as a voxel located at an (x, y, z) coordinate, the multiple data values corresponding to a pixel or voxel value from one of a plurality of imaging modalities. As the imaging tool **10** is deployed over a target, the transformed three-dimensional imaging data is populated into the multimodal data structure at locations corresponding to the three-dimensional locations of the transformed data. In embodiments, newly acquired and transformed imaging data from the imaging system **10** for a given modality is combined with existing three-dimensional image data, for that same modality and corresponding location, stored in the multimodal data structure, to refine the data, for example, by improving the signal-to-noise ratio of the image data. In embodiments, the imaging system **10** combines the data by determining one or more of a minimum, a maximum, an average, a weighted average, a median, or other combination of values, for each overlapping voxel of newly acquired and transformed data and existing data, for the same modality, in the data structure. In embodiments, the imaging system **10** compounds the newly acquired data with existing data in the data structure, for that same modality and corresponding location. In an embodiment, the imaging system **10** replaces existing data within the three-dimensional multimodal image data structure with newly acquired image data, for that same modality and corresponding location. In embodiments, the imaging system **10** replaces existing data with new image data when a quality metric, for example, signal-to-noise ratio is determined to be better for the newly acquired data when compared to the existing data. In embodiments, a user may select to combine or replace existing data, based on one or more of a button, switch, digital user interface, or the like. In embodiments, the imaging system **10** generates a two-dimensional blended or stitched image by sampling voxels that lie on a plane that intersects the three-dimensional volume defined by a three-dimensional multimodal data structure.

In embodiments, the imaging system **10** populates one or more of the acquired ultrasound data and optical data, or combines with existing data, into a three-dimensional multimodal data structure based on a similarity metric. As a non-limiting example, a relative transform is determined based on a similarity metric generated between existing data in the three-dimensional multimodal data structure and newly acquired data from an imaging tool, for a given imaging modality. In embodiments, the imaging system **10** samples existing data in the data structure to match the dimensionality of the newly acquired data. The relative transform determined for one imaging modality is used to transform newly acquired data from another imaging modality, in combination with the known transform between the imaging modalities, to update the data of the three-dimensional multimodal data structure. In embodiments, the similarity metric is a pixel-based measure, such as the mean squared error of the pixel values, the mean absolute error of the image pixel values, or the peak signal-to-noise ratio. In embodiments, the similarity metric is a correlation-based measure, such as a linear correlation between pixel values of an image, or Pearson Correlation Coefficient, or the normalized cross-correlation of pixel values of an image. In further embodiments, the similarity metric is selected from a histogram-based measure, an information-theory measures, a feature-based measure, a transform-based measures, or a learning-based measures. In embodiments, one or more of the existing data and newly acquired data is filtered prior to determining a similarity metric.

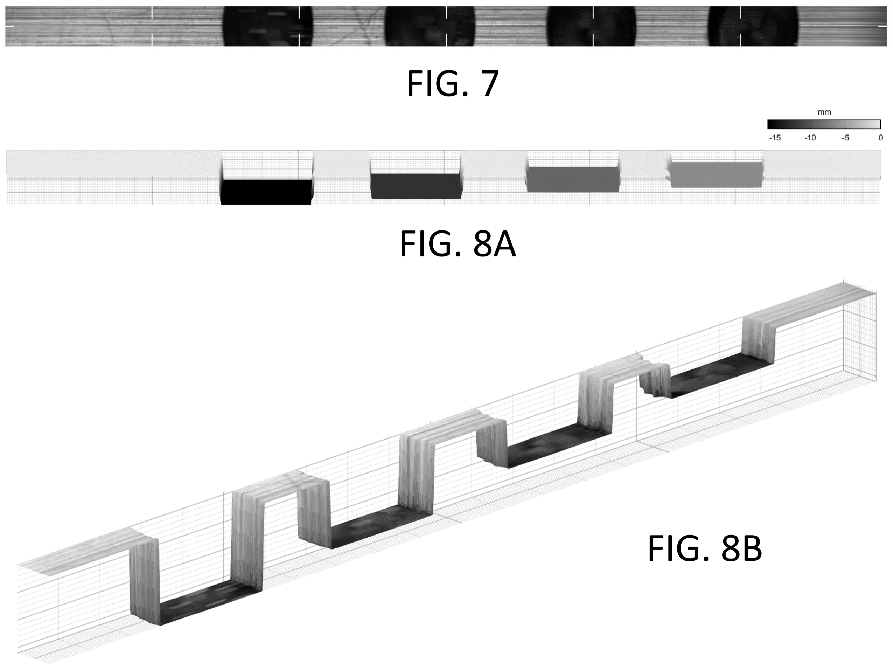

**FIG. 7** illustrates exemplary optical image data acquired and stitched together based on the estimate pose for each image frame, when an imaging system **10** as described herein was deployed on a target. A steel plate target with one-inch (25.4 mm) holes in a linear arrangement, with varying depths of 0.625, 0.5, 0.35 and 0.25 inches (15.88, 12.70, 8.89 and 6.35 mm) was imaged. The distance between the center of adjacent holes was 1.75 inches (44.45 mm). About 500 image frames were obtained from the target. **FIG. 8A** and **FIG. 8B** illustrate an exemplary ultrasound volume with optical image data mapped to the surface as a texture, obtained from the same target. In the examples of **FIG. 7, 8A** and **8B****,** the optical field of view is wider than depicted and has been rendered based on the acoustic field of view.

In embodiments, the imaging system **10** displays a three-dimensional (3D) multimodal image volume to a user. In embodiments, the imaging system **10** further processes the 3D multimodal image volume such that a portion or a totality of the data is displayed to a user. The 3D data may be processed and rendered using methods including but not limited to rasterization, ray tracing, path tracing, ray marching, volume rendering, photon mapping, radiosity, or point-based rendering methods. In a further embodiment, the imaging system **10** displays the three-dimensional multimodal image volume to a user, such that it is co-located with the imaging tool using virtual reality (VR) and/or augmented reality (AR). In an embodiment, the imaging system **10** further processes the three-dimensional multimodal image volume to identify features and flaw of an examined target.

In embodiments, the imaging system **10** extracts one or more target surfaces or features from the acquired three-dimensional ultrasound data. Non-limiting examples of target surfaces or features include three-dimensional models, point cloud sets, and segmented three-dimensional ultrasound data. These target surfaces or features are described with respect to, for example, a reference tool frame. The imaging system **10** then updates imaging parameters based on the known tool pose and the one or more detected target surfaces, including but not limited to Tx delays, Rx delays, dwell periods, beam steering, beam focusing, transmit beamforming, and receive beamforming, to improve the quality of the acquired ultrasound data. In embodiments, the imaging system **10** re-processes previously acquired ultrasound data using updated imaging parameters, to improve the quality of the reconstructed ultrasound data.

In embodiments, the imaging system **10** uses a three-dimensional multimodal image dataset to generate a digital twin of the examined target. A digital twin in the context of Non-Destructive Testing (NDT) is a high-fidelity, virtual replica of a physical asset, system, or process for the purposes of simulation, monitoring, and analysis without causing any physical harm to the asset being tested. A digital twin representation of an asset is created using data obtained from the imaging tool described herein, including comprehensive details about the physical entity's geometry, material properties, and operational conditions. The digital twin is continuously updated with real-time data from the physical counterpart, allowing for intricate inspection and diagnostics, predictive maintenance, and optimization of performance through advanced computational models. In embodiments, a digital twin of manufactured part or target is displayed to a user using virtual reality and/or augmented reality.

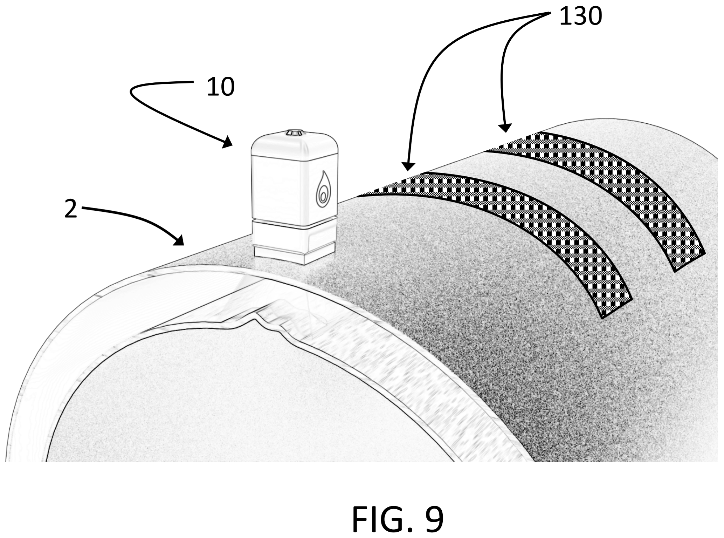

In embodiments, one or more sonically transparent visual markers **130** are deployed on the target surface, or a portion of the target surface, prior to deploying an imaging system **10** for scanning, as schematically illustrated in **FIG. 9****.** The optical system **108** acquires images of the visual markers when the imaging tool is deployed. In an embodiment, the visual markers **130** are a plastic adhesive tape with one or more patterns visible on the surface. In embodiments, each of the one or more patterns is a quick response (QR) code. In embodiments, a singular pattern is repeated on a plurality of visual markers.

In an embodiment, a visual marker **130** includes a visual pattern to improve pose estimation and tracking of the imaging tool **10** by enabling the acquisition of unique images of the surface of the target with the visual pattern. The visual pattern is adapted to enhance the accuracy and resolution of the similarity measure determination, described above. For example, in embodiments, a visual marker **130** is deployed on a target surface of a manufactured part to be scanned, prior to being imaged by the imaging system, when a target surface has been identified as lacking adequate surface texture or features for reliable pose estimation and tracking. The deployed visual marker **130** provides a unique pattern such that similarities between optical image frames captured by the optical system **108** can be detected, and a reliable pose estimation can be determined.

In an embodiment, the one or more visual markers **130** each comprise one of a plurality of patterns, where each pattern is encoded with context-specific information. For example, the information encoded in the plurality of patterns includes, but is not limited to, one or more of a location and orientation of a reference frame, a location of a reference coordinate, the direction of a reference axis, a part type, a material type, a job number, a part number, a client name, a target scanning region identifier, a potential flaw region identifier, a region of interest, a scanning exclusion region, an imaging tool configuration, a segmentation pattern, and a calibration pattern, among others. The optical system is adapted to extract the context-specific information from each of the plurality of patterns, and the imaging system **10** processes the information accordingly.

In an embodiment, the pose estimation and tracking system **120** establishes the location and/or orientation of a reference frame when the optical system identifies a pattern corresponding to the location and/or orientation of a reference frame. In an embodiment, the pose estimation and tracking system aligns a reference frame with a reference axis when the when the optical system identifies a pattern corresponding to the direction of a reference axis. In an embodiment, the pose estimation and tracking system updates previously determined pose information when a reference frame or reference axis is established.

In embodiments, the imaging system **10** stores information including one or more of part type, material type, job number, part number, or client name, in association with acquired optical image data or ultrasound data, when the optical system identifies a pattern corresponding to the listed client and target information.

In embodiments, the patterns on the visual markers correspond to one or more target scanning regions. For example, prior to scanning, the surface of a target may be divided into multiple regions, and a different target scanning region pattern is deployed on each region. In embodiments, the scanning regions are laid out in a predetermined configuration. When the optical system identifies a pattern corresponding to a target scanning region, the imaging system determines that said target scanning region is being scanned and generates a measure of how many regions have been scanned. In embodiments, the pattern corresponding to a target scanning region further includes information identifying the target scanning region. In embodiments, the placement of the visual markers define a region of interest. In embodiments, the placement of the visual markers define a scanning exclusion region. In embodiments, the imaging system generates an imaging quality metric based on the number of regions scanned, compared to an expected number of regions to be scanned. In embodiments, an imaging quality metric is further based on one or more of an amount or density of data stored in a multimodal data structure at locations corresponding to a scanned region, the presence of data voids in a multimodal data structure at locations corresponding to a scanned region, a signal-to-noise ratio of data corresponding to a scanned region, and target features detected in the data corresponding to a scanned region. For example, detected target features may comprise target surfaces or flaws obtained from processing imaging data of the target or manufactured part, or may comprise regions defined by additional visual markers, as described above. In an embodiment, the imaging system **10** provides feedback to a user, indicating to the user those regions which have yet to be scanned, or which require further scanning, based on a predetermined configuration. In embodiments, feedback to the user is provided by the imaging system **10** through one or more of visual, auditory or tactile feedback or response.

In embodiments, the pattern on the visual markers corresponds to a potential flaw region pattern. Such visual markers are deployed on the surface of a target by an operator, when, for example, a pre-scan inspection reveals a region of a potential flaw. The imaging system **10** is configured to acquire ultrasound and/or optical data at a predetermined resolution, predetermined data density, predetermined signal-to-noise ratio, or other predetermined parameter, to meet quality control requirements, when the optical system identifies such a pattern. In an embodiment the imaging system **10** provides feedback to a user when the quality control requirements are not being met for a potential flaw region. In embodiments, feedback to the user is provided by one or more of visual, auditory or tactile feedback.

In embodiments, the pattern on the visual markers corresponds to an imaging tool configuration information pattern. Such visual markers are deployed on the surface of a target by an operator, when, for example, a region of a target is to be scanned using predetermined imaging parameters. The imaging system **10** is configured to acquire ultrasound and/or optical data with predetermined parameters when scanning a target region, when the optical system identifies such a pattern.

In an embodiment, the visual marker **130** includes a calibration pattern that comprises an optically visible pattern aligned and registered with an acoustically visible pattern, that generates a detectable reflection when insonated with an ultrasound signal. During a calibration process, as described in detail, below, the imaging system **10** is adapted to acquire both optical data and ultrasound data from the calibration pattern, and the imaging system **10** processes the optical data and acoustic data to determine a calibrated coordinate transformation between a local optical data reference frame and a local ultrasound data reference frame. In embodiments, a visual marker **130** with a calibration pattern is used to improve the generation of a relative transform between a first ultrasound data frame and a second ultrasound data frame, during a pose estimation and tracking process.

In an embodiment, the visual marker **130** includes a segmentation pattern, which is deployed over a portion of a target or target surface, to segment data acquired from regions with the segmentation pattern from data acquired from regions without a segmentation pattern. The imaging system **10** segments the image data acquired when the optical system identifies a visual marker with a segmentation pattern. In an embodiment, the imaging system **10** discards image data acquired when a segmentation pattern is not identified. In an embodiment, the imaging system **10** stores image data in a first data structure when a segmentation pattern is identified by the optical system, and stores image data in a second data structure when a segmentation pattern is not identified.

In an embodiment, the visual marker **130** includes a delimitation pattern, which is deployed over a portion of a target or target surface to delimit a scanning area of the target surface. In embodiments, a delimitation pattern further defines a direction with respect to the delimitation pattern, such that one or more valid scanning regions and one or more invalid scanning regions can be defined based on the placement of the visual marker **130** on a target surface. For example, a delimitation pattern on an adhesive tape may define a first region on one half of a top side of the tape and a second region on the opposing half of the top side of the adhesive tape. In embodiments, an imaging system **10** as described herein provides one or more of an auditory, visual or tactile feedback to a user when a delimitation pattern on a visual marker **130** is detected and the location of the imaging tool is determined to be within an invalid scanning region. In embodiments, an imaging system **10** discards imaging data when a delimitation pattern is detected, and the location of the imaging tool is determined to be within an invalid scanning region. In this manner, a delimitation pattern aids a user to acquire data only from regions of interest when scanning a target surface when using an imaging system **10** as described herein.

In some embodiments, one or more visual markers are added to the surface of the target or are included in a coupling interface panel, the coupling interface panel being deployed over a target surface prior to imaging using the system **10.** In some embodiments, the coupling interface panel is deployed such that an entire target surface to be scanned is covered by said coupling interface panel. In some embodiments, the coupling interface panel is deployed such that a portion of a target surface to be scanned is covered by the coupling interface panel. In some embodiments, the coupling interface panel includes adhesive on a bottom side, for affixing the coupling interface panel to a target surface. In some embodiments, the coupling interface panel provides a uniform and consistent stand-off distance between the bottom surface **114** of the ultrasound imaging tool and the target surface, based on a thickness of the coupling interface panel. In some embodiments, the coupling interface panel operates as a lubricant between the imaging tool and the target surface. In some embodiments, the coupling interface panel includes a polymer matrix embedded with encapsulated fluid elements suitable for transmitting acoustic waves. In some embodiments, the coupling interface panel is manufactured from one or more of elastomeric materials, polymers, gels, hydrogel-based substrates, and silicone composites.

In some embodiments, a coupling interface panel includes multiple visual markers on a top surface thereof, defining one or more regions and functions, as described herein. In some embodiments, the layout of visual markers on a coupling interface panel defines a predetermined scanning configuration for one or more predetermined targets and target types.

In operation, a coupling interface panel is deployed on a target of interest, such that the coupling interface panel and the pattern and placement of visual markers on the coupling interface panel are aligned with an underlying target. An imaging tool of the imaging system 10 as described herein is deployed over the target and coupling interface panel, and the visual markers on the coupling interface panel are detected using the system, as described herein. In this manner, multiple targets can be scanned using the same coupling interface panel, such that all scans are repeatable.

### Calibration for Registration

A method for calibrating the imaging system **10** as disclosed herein is described below. The footprint of the bottom surface of the imaging block **100,** which in embodiments corresponds to the bottom surface of the second block region, defines a maximum area of the target surface that is captured by the imaging system **10,** and the maximum area of the target surface from which light is directed to the optical system, through the imaging block **100,** as described above. In other words, the bottom surface defines a maximum optical field of view and a maximum ultrasonic field of view. In embodiments, the optical FoV or the ultrasonic FoV may be smaller than the footprint of the bottom surface of the imaging block **100.** In an embodiment, the optical FoV is different than the ultrasonic FoV, which results in data being acquired for different effective areas for each imaging modality. Based on a first principles approach and given the known parameters and dimensions of the imaging tool **10,** including its components and systems, the registration between the optical data and the ultrasound data is generally known. In other words, using the parameters and dimensions of the imaging tool **10,** a coordinate transformation between a local reference frame for the optical data and a local reference frame for the ultrasound data is known. In embodiments, pixel or voxel resolution may differ between the ultrasound data and the optical data, and scaling is included in the coordinate transformation. The imaging system **10** uses the coordinate transformation to create a registered multimodal image volume.

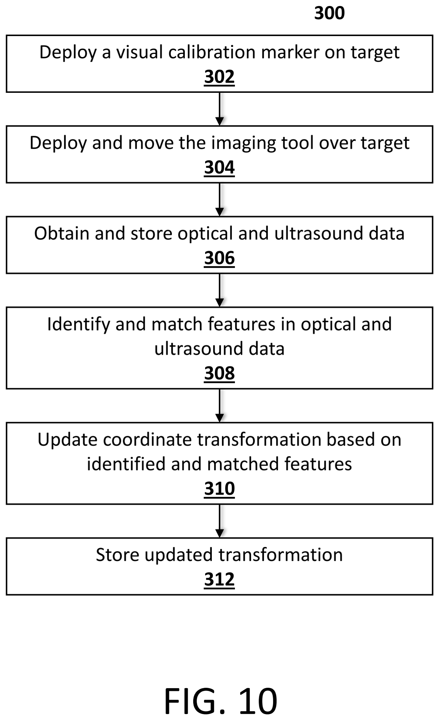

In an embodiment, a registration calibration process **300** is performed to refine the coordinate transformation between an optical image reference frame and an ultrasound image reference frame, as outlined in the flowchart illustrated in **FIG. 10****.** In some implementations, one or more process blocks of **FIG.** 10 may be performed by a device. Calibration is crucial when combining imaging modalities to account for manufacturing tolerances, variations in target material properties, and environmental factors, ensuring accurate alignment and integration of data from different sources. This registration calibration process **300** compensates for potential discrepancies and harmonizes the performance of the combined systems.

In an embodiment and as illustrated if **FIG. 10****,** process **300** may include deploying a visual marker with a calibration pattern on a target or surface (block **302**)**.** The imaging tool is then deployed over the target surface (block **304**)**,** acquiring both optical data and ultrasound data from the target surface, and specifically from the calibration pattern on the visual marker, and the acquired data is stored (block **306**)**.** A plurality of features are identified in both the optical data and in the ultrasound data, and each of the plurality of features is matched to each other (block **308**)**.** In an embodiment, a user identifies the plurality of features. In an embodiment, the imaging system identifies the plurality of features. In an embodiment, the plurality of feature are identified by a remote processor. Then, the imaging system **10** generates a new transformation matrix by using the coordinates of the identified matching features (block **310**), for example by solving the resulting linear system of equations using least squares estimation. Finally, the updated coordinate transformation is stored for future use by the imaging system **10** (block **312**).

Although **FIG. 10** shows example blocks of process **300,** in some implementations, process **300** may include additional blocks, fewer blocks, different blocks, or differently arranged blocks than those depicted in **FIG. 10****.** Additionally, or alternatively, two or more of the blocks of process **300** may be performed in parallel.

### Calibration for Internal Reflections

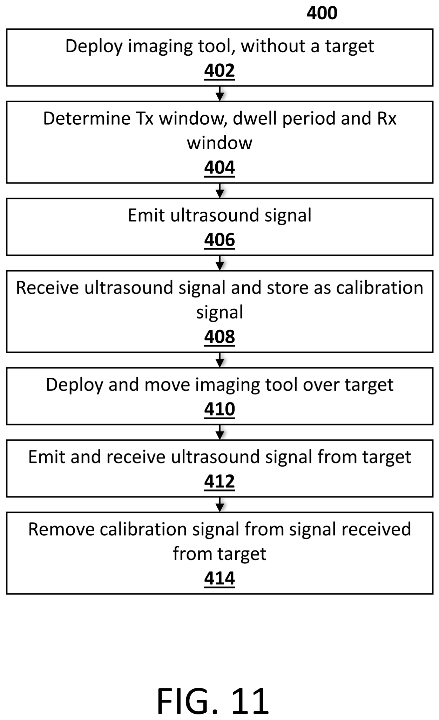

While the regions of the imaging block **100** are sonically transparent, varying degrees of internal ultrasound reflections are expected, depending on an embodiment of the imaging block **100.** In addition, features of an individual imaging block, for example due to manufacturing tolerances, may generate reflection patterns specific to each instance of an imaging block **100.** It is desirable to remove internal reflections originating from the imaging block **100,** to achieve a high signal-to-noise ratio for the signals received from an insonated target, to avoid having internal reflections mask or obscure features in a target, and to avoid having internal reflections create non-existent features. A method for calibrating the imaging system **10** to remove internal reflections is disclosed, as outlined in process **400** illustrated in the flowchart of **FIG. 11****.** In some implementations, one or more process blocks of **FIG. 11** may be performed by a device.

During a first calibration step of calibration process **400,** an imaging tool **10** as described herein is deployed for ultrasound data acquisition, without a target (block **410).** As a non-limiting example, the imaging tool **10** is deployed in a tank containing a fluid or medium expected during normal operation, such that only ultrasound signals corresponding to internal reflections within the imaging block **100** are received. In other words, the operational environment is replicated, without a target.

A Tx window, a dwell period, and a Rx window are determined in process **400,** based on the dimensions and speed of sound of the material of the imaging block **100** (block **404**). In an embodiment, a dwell period is minimized and a Rx window is determined based on the time needed to receive a wavefront reflection from the bottom surface **114** of the second block region **106.** In an embodiment, the Tx window, the dwell period and Rx window are determined based on imaging parameters for a target. In an embodiment, the Tx window, the dwell period and Rx window are determined based on multiples of the period of an expected ringing or resonance frequency within the imaging block **100.**

Next, an ultrasound signal is emitted from the ultrasound array **12** (block **406**), and the reflected signals are received, according to the determined Tx window, dwell period and Rx window, and the received signal is stored as a calibration signal (block **408**). In embodiments, the steps in blocks **406** and **408** are repeated multiple times, to obtain an averaged calibration signal from the multiple captures to enhance the signal-to-noise ratio of the calibration signal. In embodiments, the steps in blocks **406** and **408** are repeated between 30 and 100 times. In an embodiment, the calibration signal is stored as RF data or I/Q data.

Subsequently, during operation, process **400** may include deploying the imaging tool **10** for imaging a target **2** (block **410).** During an ultrasound data acquisition step (block **412**), the calibration signal is used to improve the signal-to-noise ratio (SNR) of the reflected ultrasound signal from the target by removing a portion or the totality of a calibration signal from the received signal (block **414**). In an embodiment, the imaging system **10** subtracts the calibration signal in the time domain from the ultrasound signal received from the target to improve the SNR. In an embodiment, the calibration signal is used to generate a calibration filter, and the imaging system **10** filters the ultrasound signal received from the target with the calibration filter to improve the SNR. In embodiments, the calibration signal is used to generate a calibration signature, which is used by the imaging system **10** on the received ultrasound signal to improve the SNR. Non-limiting examples of a calibration signature include representations using on or more of an eigen-based representation, a correlation-based representation, a signal mask representation, and a local filter-based representation, among others.

Although **FIG. 11** shows example blocks of process **400,** in some implementations, process **400** may include additional blocks, fewer blocks, different blocks, or differently arranged blocks than those depicted in **FIG. 11****.** Additionally, or alternatively, two or more of the blocks of process **300** may be performed in parallel.

### Data Acquisition

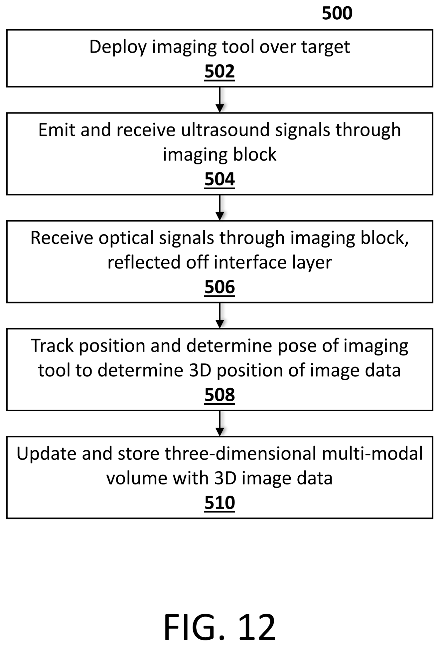

**FIG. 12** is a flowchart of an example process **500** of an imaging system **10** as described herein, in operation. In some implementations, one or more process blocks of **FIG. 12** may be performed by a device.

In operation, an imaging tool is deployed on a target surface (block **502**) to acquire multimodal imaging information to generate a three-dimensional volume of the scanned target. For each location, one or more ultrasound signals are emitted by the ultrasound array **12** (block **504**), which are directed through the imaging block **100,** towards the target **2.** Reflected ultrasound signals from the target are received through the imaging block **100,** at the transducer array **12** (block **504**). The ultrasound signals received by the transducer array **12** are received and processed by circuits **14,** which filter, beamform and generate ultrasound images of the scanned target. In an embodiment, a linear phased array ultrasonic transducer receives signals to generate a two-dimensional image. In an embodiment, a two-dimensional phased array ultrasonic transducer receives signals to generate a three-dimensional image volume.

Concurrently with the acquisition of the ultrasound data, light received at the optical system within the optical field of view from the target surface is used to generate an image of the target surface (block **506**). In an embodiment, a light source provides supplementary illumination to the target surface, to generate a stronger signal at the optical system **108.** The pose estimation and tracking system determines a pose, for example, the position and orientation, of the imaging tool, and updates a coordinate transformation based on a determined relative transform (block **508**). The imaging system **10** uses the updated coordinate transformation to calculate the three-dimensional coordinates for the image data, with respect to a reference frame, and the data is stored (block **510**).

Although **FIG. 12** shows example blocks of process **500,** in some implementations, process **500** may include additional blocks, fewer blocks, different blocks, or differently arranged blocks than those depicted in **FIG. 12****.** Additionally, or alternatively, two or more of the blocks of process **500** may be performed in parallel.

In embodiments, an imaging tool as described herein is deployed on a mechanical device such as a gantry, mechanical linkage or robotic manipulator to deploy the imaging system **10** in a controlled and repeatable manner, and providing a mechanical imaging system. In embodiments, the mechanical device includes one or more of joints and links, actuators, sensors and a control subsystem, and is configured to deploy an imaging tool over a predetermined or controlled trajectory.

In an embodiment, an imaging tool is configured as an end effector of a robotic manipulator including a control system, for providing a mechanical imaging system for imaging manufactured parts. The control system is configured to control the robotic manipulator, including the position and orientation of the imaging tool, by providing control signals to the actuators at least based on signals received from sensors and a control schema. In embodiments, the control system is further configured to control the robotic manipulator based on sensor signals including a pose of the imaging tool as determined by the pose estimation and tracking system and provided to the control system. For example, a relative transform between a first time-step and a second time-step as determined by the pose estimation and tracking system of the imaging system **10,** describing the relative movement of the imaging tool, and therefore of the end effector of the robotic manipulator, is provided to the control system. In another non-limiting example, an instantaneous pose of the imaging tool is provided to the control system.

In embodiments, the control system of the mechanical imaging system is configured to generate a tool or end effector trajectory over a manufactured part based on one or more predetermined goals, such as ensuring a surface area or region of a manufactured part is scanned, ensuring a volume of interest of manufactured part is scanned, ensuring a desired data density is acquired, ensuring a desired signal to noise ratio is acquired, determining a shortest scanning trajectory, and determining a smooth trajectory. The control system is further configured to provide control signals to the robotic manipulator to deploy the imaging system over a tool trajectory.

In embodiments, the imaging system **10** is further configured to provide one or more coordinates or regions of interest based on acquired imaging data to the control system, and the control system is further configured to generate or update a tool trajectory based on the one or more coordinates or regions of interest and one or more predetermined goals. In embodiments, the control system is further configured to provide updated imaging parameters to the imaging system. In a non-limiting example, the imaging system is deployed by a robotic manipulator on a scan path to image a manufactured part, identifies a flaw in a manufactured part based on acquired imaging data, and provides one or more coordinates of the flaw to the control system. The control system generates an updated trajectory to redeploy the imaging system over the flaw, provides updated scanning parameters to the imaging system, such as imaging with additional scan angles, and provides control signals to redeploy the imaging system by the robotic manipulator over the updated scan trajectory. In a further non-limiting example, the imaging system is deployed by a robotic manipulator on a scan trajectory to image a manufactured part, identifies a surface in a manufactured part based on acquired imaging data, and provides one or more coordinates defining a region of interest to the control system. In a further non-limiting example, the imaging system is deployed by a robotic manipulator on a scan trajectory to image a manufactured part, identifies a surface in a manufactured part based on acquired imaging data, and provides one or more coordinates defining a scanning exclusion region to the control system. The control system generates an updated trajectory to redeploy the imaging system over the surface, provides updated scanning parameters to the imaging system, such as updated beamforming delays based on the location of the imaged surface, and provides control signals to redeploy the imaging system by the robotic manipulator over the updated scan trajectory.

In embodiments, the imaging system is further configured to provide control information based on acquired data to the control system, and the control system is further configured to generate or update a tool trajectory based on the control information and one or more predetermined goals, and to provide updated imaging parameters to the imaging system. In a non-limiting example, the imaging system is configured to provide control information to the control system regarding an imaging quality metric for one or more locations or regions. The control system is further configured to generate or update a scan trajectory, such that the scan trajectory traverses any regions identified as having an imaging quality metric lower than a predetermined threshold, such that said regions are rescanned.

In embodiments, the imaging system is configured to provide control information to the control system based on visual markers **130** identified by the pose estimation and tracking system. In embodiments, the imaging system further provides one or more of relative transforms and coordinates corresponding to the locations of the identified markers. In a non-limiting example, the imaging system provides information to the control system indicating that one or more delimitation markers have been identified on a surface of a scanned manufactured part. The control system is further configured to generate or update a scan trajectory, such that the scan trajectory remains within a region defined by the detected delimitation markers.

In a further non-limiting example, the imaging system provides information to the control system indicating that target scanning region markers have been identified on a surface of a scanned manufactured part. The control system is further configured to generate or update a scan trajectory, such that the scan trajectory traverses the totality of a region defined by the detected scanning region markers.

In a further non-limiting example, the imaging system provides information to the control system indicating that imaging tool configuration information markers have been identified on a surface of a scanned manufactured part. The control system is further configured to generate or update a scan trajectory, such that the scan trajectory traverses a region defined by the detected markers, and to provide updated scanning parameters to the imaging system based on the imaging tool configuration information from the identified markers.

In embodiments, the control system is further configured to receive user input for generating or updating a trajectory for the imaging system on the end effector of the robotic manipulator. In embodiments, user input is received via one or more of a graphical user interface, a handheld controller, a pointing device, a remote-control device, gesture control, voice control and a control file with preprogrammed instructions. In embodiments, the control system is further configured to generate or update a user-defined trajectory, based on information received from the imaging system, as described above.

In embodiments, the control system is further configured to receive user input for updating the position and orientation of the robotic manipulator, including the imaging system. In embodiments, user input is received via one or more of a graphical user interface, a handheld controller, a pointing device, a remote-control device, gesture control, and voice control. In embodiments, the mechanical imaging system is further configured to provide one or more of a an auditory, visual or tactile feedback to a user. As a non-limiting example, a user provides an input by a handheld controller and receives haptic feedback therefrom.

The imaging systems and methods as described herein offers various advantages over existing tools and methods. The imaging system enables the acquisition of co-located images from various modalities, specifically using ultrasound and optical images, without the need for an additional registration process, which results in improved efficiency when constructing multimodal image volumes. The disclosed systems and methods also enable the acquisition and construction of a multimodal image volume in a single pass. The imaging system **10** enables device position tracking, texture mapping and data capture. Accurate three-dimensional measurements of the target surface enable on-the-fly corrections to ultrasound beamforming, for higher resolution ultrasound data acquisition. Further, the multimodal nature of the data enables intuitive acquisition by a user, as acquisition of multiple imaging modalities allows this co-located data to be displayed to a user in real-time, providing a comprehensive representation of an imaged target.

As described, the pose estimation and tracking system and methods allow tracking the position and orientation of an imaging device without the drawbacks of other types of systems that may be employed during the inspection of manufactured parts. For example, mechanical tracking systems may require multiple complex and moving parts with typical drawbacks including mechanical wear and slippage during tracking. As described, the embodiments of the pose estimation and tracking system and methods overcome these problems, to increase overall accuracy and provide reliable pose estimation.

Fig. 13 illustrate the use of the imaging tool to inspect an airplane wing. In this example, the tool **10** moves over the curved surface within a target area **2** indicated by the shaded bounding box. This may be moved by hand or a robotic manipulator to follow an inspection path **150,** which may be predetermined or decided in real-time by the operator, in order to capture the whole target area. In this example, only a portion of the wing is to be inspected rather than the whole wing and there may be an area of focused inspection **140** within this where defects are suspected. Markers **130** may be placed on the surface to indicate to the operator where to start and finish the scan. These visual markers are captured by the optical system for location calibration during subsequent analysis. The bounding box may be a virtual boundary programmed into a robotic manipulator or may be physically marked on the surface to inform the operator of the area to be inspected. In some embodiments, the optical system and real-time processing can be used to detect the edge of this visual boundary to control the inspection path to be followed, i.e. when a visual boundary edge is detected, the system automatically controls the manipulator to follow this edge or stay within the boundary area.

The imaging system as described herein combines ultrasound volumetric imaging with optical measurements, such as a camera or laser, to provide surface mapping and high-resolution positional registration. As described, the imaging system provides for very accurate registration between different imaging modalities, without the need for complex algorithms or extensive computation. The disclosed imaging system can be used in various applications, including immersion tests and in-ditch scenarios, where it simplifies surface registration without the need for mechanical complexity like wheel encoders and gantry systems. The imaging system enables displaying video of the target surface beside the ultrasound or superimposed, providing real-time registration between two different modalities to combine their data effectively and provide accurate real-time feedback to users. This dual modality approach contributes to texturing layers for digital representations, such as a digital twin, enhancing the analysis of the scanned sample or target. In addition, the high registration accuracy provided by the data acquired by the imaging system as disclosed enables an intuitive display of multiple sources of information to a user.

It will be appreciated that data processing, including acquisition, filtering, calculating and determining, may be performed with plural processors: on the device, at the operations site, and optionally on a remote computer. The term 'processor' is intended to include computer processors, cloud processors, microcontrollers, firmware, GPUs, FPGAs, and electrical circuits that manipulate analogue or digital signals. While it can be convenient to process data as described herein, using software on a general computer, many of the steps could be implemented with purpose-built circuits.

It will be appreciated that the various memories discussed may be implemented as one or more memory units. Non-volatile memory is used to store the compressed data and instructions so that the device can function without continuous power. Volatile memory (RAM and cache) may be used to temporarily hold raw data and intermediate computations. Additionally or alternatively, data may be transmitted over a telemetry unit of the device to a corresponding telemetry unit of the operation site computer system.

Terms such as "top", "bottom", "distal", "proximate" "downhole", "uphole", "below," "above," "upper, downstream," are used herein for simplicity in describing relative positioning of elements of the conduit or device, as depicted in the drawings or with reference to the surface datum. Although the present methods, systems and devices have been described and illustrated with respect to preferred embodiments and preferred uses thereof, it is not to be so limited since modifications and changes can be made therein which are within the full, intended scope as understood by those skilled in the art.

While many specific details have been provided for a thorough and complete understanding of the embodiments as described herein, it will be understood by those of ordinary skill in the art that said embodiments can be practiced even without these specific details. In other instances, detailed descriptions of components, methods and procedures have not been provided to avoid obscuring the relevant features being described. Further, the embodiments described herein should not be considered as limiting the scope of the method, system and devices as recited in the claims.

## Claims

1. A multimodal imaging system comprising:
an acoustically and optically transparent imaging block, comprising at least a first surface, a second surface, and a target contact surface;
a phased array ultrasonic transducer coupled to the first surface, for emitting ultrasound waves through the imaging block to an ultrasonic field of view including the target contact surface, and for receiving reflected ultrasound waves to generate received ultrasound signals;
an optical system coupled to the second surface, for detecting optical signals through the imaging block from an optical field of view including the target contact surface, the optical field of view substantially overlapping with the ultrasonic field of view, and generating received optical signals;
a tracking system for determining a movement vector, based on comparing a first received optical signal and a second received optical signal; and
a stitching system for generating an image assembly based on one or more of the received ultrasound signals and the received optical signals using the determined movement vector.

2. The multimodal imaging system of claim 1, wherein the imaging block further comprises:
a first region that is acoustically transparent comprising said first surface; and
a second region that is acoustically and optically transparent comprising said second surface and said target contact surface, and acoustically coupled to the first region to form an interface therebetween;
wherein the interface reflects the optical signals, preferably wherein the first region and the second region are made of different materials.

3. The multimodal imaging system of claims 1 or 2, wherein the imaging block further comprises an optically reflective interface layer to reflect the optical signals, wherein the optically reflective interface layer is a metal selected from one or more of aluminum, silver, gold, copper, platinum, chromium, nickel, titanium and alloys thereof, and wherein the optically reflective layer is formed by metal deposition.

4. The multimodal imaging system of any one of claims 1 to 3, wherein a central optical axis within the optical field of view of the optical system and a central axis within the ultrasonic field of view of the phased array ultrasonic transducer are aligned within at least a portion of the imaging block.

5. The multimodal imaging system of any one of claims 1 to 4, wherein the imaging block defines a frustum shape, the first surface defining a top surface of the frustum shape, the target contact surface defining a bottom surface of the frustum shape, the top surface opposite the bottom surface.

6. The multimodal imaging system of any one of claims 1 to 5, wherein the acoustically and optically transparent imaging block comprises a material selected from one or more: of polymethyl methacrylate (PMMA), polycarbonate (PC), polystyrene (PS), polyethylene (PE), high-density polyethylene (HOPE), polyvinyl chloride (PVC), polyurethane (PU), polysulfone (PSU), borosilicate glass, fused silica (quartz), and aluminosilicate glass.

7. The multimodal imaging system of any of claims 1 to 6, wherein the optical system comprises one or more of an imaging sensor, a camera, a laser, and an optical lens coupling the optical system to the second surface.

8. The multimodal imaging system of any of claims 1 to 7, further comprising a light source, optically coupled to the acoustically and optically transparent imaging block, and wherein the light source comprises one or more of a visible light source, an infrared light source, an ultraviolet light source, and a coherent light source.

9. The multimodal imaging system of any of claims 1 to 8, further comprising a laser light source coupled to the imaging block and arranged to illuminate the ultrasonic field of view and induce stress in the target contact surface to generate the received ultrasound signals.

10. The multimodal imaging system of any of claims 1 to 9, wherein the tracking system further comprises one or more of a gyroscope, an inertial measurement unit, an accelerometer and a high-frequency ultrasound system for generating sensor signals, and determining the movement vector is further based on said sensor signals.

11. A method of generating a three-dimensional volume assembly of a target using a multimodal imaging system including an acoustically and optically transparent imaging block, a phased array ultrasonic transducer coupled to the imaging block, and an optical system coupled to the imaging block, the method comprising the steps of:
emitting ultrasound signals from the phased array ultrasonic transducer through the imaging block to an ultrasonic field of view ;
receiving reflected ultrasound signals at the phased array ultrasonic transducer through the imaging block, to generate received ultrasound signals;
receiving optical signals at the optical system through the imaging block from an optical field of view, the optical field of view substantially overlapping with the ultrasonic field of view, to generate received optical signals;
determining a movement vector of the multimodal imaging system based on comparing a first one and a second one of the received optical signals;
generating a tool pose based on the magnitude and the direction of movement;
generating ultrasound imaging frames using the received ultrasound signals;
generating transformed imaging data using the tool pose and one or more of the ultrasound imaging frames and the received optical signals;
combining a plurality of transformed imaging data to generate the three-dimensional volume assembly; and
processing the three-dimensional volume assembly to identify a flaw in the target.

12. The method of claim 11, wherein said determining a movement vector is further based on sensor signals from one or more of a gyroscope, an accelerometer, an inertial measurement unit and a high-frequency ultrasound system.

13. The method of claims 11 or 12, further including:
emitting laser signals through the imaging block to generate ultrasound waves in the target, using a laser light source for ultrasound generation coupled to the imaging block;
receiving second reflected ultrasound signals at the phased array ultrasonic transducer through the imaging block, to generate second received ultrasound signals; and
generating second ultrasound imaging frames using the second received ultrasound signals.

14. The method of claim of any of claims 11 - 13, further comprising:
deploying one or more markers, the one or more markers including an optically detectable pattern;
detecting and identifying the one or more markers in the received optical signals; and
generating one or more responses based on the detected and identified one or more markers.

15. The method of claim 14, wherein said generating the one or more responses further comprises providing one or more of an auditory feedback, a visual feedback, a tactile feedback to a user, and updating one or more system parameters.

16. The method of claim 14 or 15, wherein said detecting and identifying the one or more markers further includes extracting encoded information from said one or more markers and providing the extracted encoded information with the one or more responses, wherein the encoded information includes one or more of a reference coordinate location, a reference frame location and orientation, a reference axis direction, a part type, a material type, a job number, a part number, a client name, a target scanning region identifier, a potential flaw region identifier, an imaging system configuration, a segmentation pattern, and a calibration pattern.

17. The method of any of claims 14 to 16, the one or more markers further including an acoustically detectable pattern, the method further comprising:
generating a first one and a second one of the ultrasound imaging frames, the first one and the second one of the ultrasound imaging frames based on received ultrasound signals including reflections from the acoustically detectable pattern; and
wherein said determining a movement vector is further based on comparing the first one and the second one of the ultrasound imaging frames.

18. The method of any one of claims 14 to 17, further including:
deploying a coupling interface panel over a target surface, the coupling interface panel including the one or more markers in a predetermined arrangement on a top surface of the coupling interface panel, a coupling interface panel thickness defining a stand-off distance, the coupling interface panel providing acoustic coupling between a target and the imaging block, the coupling interface panel made of a material selected from one or more of elastomeric materials, polymers, gels, hydrogel-based substrates, and silicone composites.
